# EUROPEAN PATENT SPECIFICATION

(11) **EP 3 539 647 B1**
(45) Date of publication and mention of the grant of the patent: **04.08.2021**
(21) Application number: 19161855.2
(22) Date of filing: 11.03.2019
(51) Int. Cl.: B01F 13/00, B01F 13/02, G01N 1/38, B01L 3/00

(54) **SAMPLE PROCESSING METHOD AND SAMPLE PROCESSING CHIP**
PROBENVERARBEITUNGSVERFAHREN UND PROBENVERARBEITUNGSCHIP
PROCÉDÉ ET PUCE DE TRAITEMENT D'ÉCHANTILLONS

(30) Priority: 16.03.2018 JP 2018049010
(43) Date of publication of application: 18.09.2019
(73) Proprietor: SYSMEX CORPORATION, Kobe-shi Hyogo 651-0073 (JP)
(72) Inventor: Yamawaki, Koya, Hyogo, 651-0073 (JP); Nakajima, Kichitaoru, Hyogo, 651-0073 (JP); Nakanishi, Katsumi, Hyogo, 651-0073 (JP); Kawamoto, Yasuko, Hyogo, 651-0073 (JP); Tagawa, Ayato, Hyogo, 651-0073 (JP)
(74) Representative: Hoffmann Eitle

(56) References cited:
- US-A1- 2002 177 159
- US-A1- 2004 121 484
- US-A1- 2005 191 630
- US-A1- 2008 311 585
- US-A1- 2009 218 704
- US-A1- 2010 002 535
- US-A1- 2011 103 174
- US-A1- 2011 315 228
- US-A1- 2016 167 053
- US-A1- 2017 259 266

## Description

### FIELD OF THE INVENTION

The present invention relates to a method of processing a sample and of preparing a droplet forming sample of forming droplets individually encapsulating a target component, and to a sample processing chip.

### BACKGROUND

There is a demand for a technique for detecting a target component in a sample for each one molecule or for each one target component (digital detection). The target component is, for example, a nucleic acid, a protein, a cell, or the like. In digital detection, for example, a target component is included in one droplet for each molecule or each target component. This means that the target component is "segmented" into one molecule or one target component, because one molecule or one target component is arranged in a unit region composed of individual droplets. In order to segment the target component per molecule or every target component, it is required to dilute the target component at a high dilution ratio.

Japanese Patent Application Publication No. 2017-158491, or its family member US 2017/0259266 A1 as shown in FIG. 39, discloses a configuration for heating of a lower portion of a reservoir 903 of a sample processing chip 902 storing a mixture 901 of a target component 905 and a predetermined diluent by a heating unit 904, and the target component 905 is diluted to a high dilution ratio by agitation produced by thermal convection. US 2009/021 8704 A1 is concerned with a mixing device.

Further, US 2004/0121484 A1 is concerned with a method and apparatus for mixing blood samples for blood analysis.

### SUMMARY OF THE INVENTION

However, according to the agitation method of Japanese Patent Application Publication No. 2017-158491 described above, since the reservoir 903 is heated and the content is agitated by thermal convection, it takes time to completely agitate. Therefore, it is preferable to obtain a desired diluted mixture by agitating a short time.

The present invention is directed to obtaining a desired diluted mixture by agitating for a short time.

The method of processing a sample and of preparing a droplet forming sample of forming droplets individually encapsulating a target component according to a first aspect of the present invention is defined in claim 1.

In the sample processing method according to the first aspect, since the processing liquid (11) and the diluent (12) in the reservoir (110) are mixed by the gas (bubbles) introduced into the reservoir (110), it is not necessary to heat the reservoir (110), and it is possible to reduce the time required for mixing as compared with when using thermal convection. In this way it is possible to obtain a desired diluted mixed solution by agitating for a short time. Since heating is not performed, it also is possible to suppress the target component (10) from changing due to heat.

In the sample processing method according to the first aspect, the reservoir (110) is a storage tank which is tube-shaped and connected to a substrate (140) of the sample processing chip (100). In the agitating, the processing liquid (11) and the diluent (12) are agitated by introducing the gas from a bottom of the storage tank and rising the gas in the storage tank. According to this configuration, as compared with the case where the reservoir (110) is provided in the substrate (140) of the sample processing chip (100), the cross sectional area of the portion through which the gas passes can be increased so that the gas can easily pass through into the storage tank. In this way agitation can be performed in a shorter time.

In the sample processing method according to the first aspect, in the agitating, the gas is introduced into the reservoir (110) for a predetermined time of 0.1 seconds or more and 60 seconds or less to agitate the processing liquid (11) and the diluent (12). With such a configuration, it is possible to effectively shorten the agitation time as compared with thermal convection.

In this case, preferably, in the agitating, the processing liquid (11) and the diluent (12) are agitated by introducing the gas into the reservoir (110) at a pressure of 100 mbar or more and 1000 mbar or less. According to this configuration, it is possible to effectively stir the interior of the storage tank with a gas having a pressure of 100 mbar or more and 1000 mbar or less.

In the sample processing method according to the first aspect, preferably, in the storing, sending the processing liquid (11) to the reservoir (110) with the gas, after storing the diluent (12) in the reservoir. According to this configuration, the processing liquid (11) can be easily sent to the reservoir (110) by supplying the gas by the same method as the gas used for agitating.

In the sample processing method according to the first aspect, preferably, the sample processing chip (100) has an inlet (112) for introducing the gas. The method further comprises introducing the gas from the inlet (112) to deliver the processing liquid (11) to the reservoir (110), after storing the diluent (12) in the reservoir (110), and introducing the gas from a bottom portion of the reservoir (110) following the supply of the processing liquid (11) by the gas introduced from the inlet (112). According to this configuration, since it is possible to continuously perform the feeding of the processing liquid (11) to the reservoir (110) and the introduction of the gas into the reservoir (110) by the same operation, it is possible to shorten the processing time as compared with when feeding and agitating of the processing liquid (11) are performed by separate operations.

In the sample processing method according to the first aspect, preferably, the sample processing chip (100) has an inlet (112) for introducing the gas. The method further comprises introducing the gas from the inlet (112) in order to send the diluent (12) to the reservoir (110) from the inlet (112), after storing the processing liquid (11) in the reservoir (110), and introducing the gas from a bottom portion of the reservoir (110) following the sending of the diluent (12) by the gas introduced from the inlet (112). According to this configuration, since it is possible to continuously perform the feeding of the diluent (12) to the reservoir (110) and the introduction of the gas into the reservoir (110) by the same operation, it is possible to shorten the processing time as compared with when feeding and agitating of the diluent (12) are performed by separate operations.

In the sample processing method according to the first aspect, preferably, the sample processing chip (100) has a quantification unit (143). The method further comprises sending the processing liquid (11) quantified using the quantification unit (143) to the reservoir (110). According to this configuration, since the processing liquid (11) can be quantified by the quantification unit (143), a fixed amount of the processing liquid (11) can be delivered to the reservoir (110) to obtain a diluted mixture with a desired dilution ratio.

In this case, preferably, the quantification unit (143) comprises an inner cavity having a predetermined content amount formed in the sample processing chip (100). According to this configuration, it is possible to accurately quantify the treatment liquid (11) with an inner cavity having a predetermined internal capacity.

In the configuration in which the quantification unit (143) is formed by an inner cavity, preferably, the sample processing chip comprises a first flow path (141) and a second flow path (144) connected to the inner cavity of the quantification unit (143). Each of the first flow path (141) and the second flow path (144) has an on-off valve (147a, 147b). The first flow path (141) is connected to an inlet (141a) for the processing liquid (11). The second flow path (144) is connected to a disposal port (144a). The method further comprises quantifying the processing liquid (11) by bring the first flow path (141) and the second flow path (144) into an open state, delivering the processing liquid (11) from the first flow path (141) and filling the processing liquid (11) in the inner cavity of the quantification unit (143). According to this configuration, the processing liquid (11) can be accurately quantified when the processing liquid (11) is introduced into the inner cavity through the first flow path (141) and the second flow path (144) in an open state.

In this case, it is preferable that the sample processing chip further comprises a third flow path (145) and a fourth flow path (146) connected to the inner cavity of the quantification unit (143). Each of the third flow path (145) and the fourth flow path (146) has an on-off valve (147c, 147d). The third flow path (145) is connected to the reservoir (110). The fourth flow path (146) is connected to a gas supply unit (202) for feeding the gas. The method further comprises filling the processing liquid (11) in the inner cavity of the quantification unit (143) by bring the first flow path (141) and the second flow path (144) into an open state and the third flow path (145) and the fourth flow path (146) into closed state and delivering the processing liquid (11) to the reservoir (110) from the first flow path (141), and delivering the processing liquid (11) filled in the inner cavity of the quantification unit (143) with the gas from the gas supply unit (202) by bring the first flow path (141) and the second flow path (144) into the closed state and the third flow path (145) and the fourth flow path (146) into the open state. According to this configuration, the processing liquid (11) is accurately quantified by introducing the processing liquid (11) into the inner cavity when the first flow path (141) and the second flow path (144) are in an open state, and the quantified processing liquid (11) can be delivered to the reservoir (110) without residual when the third flow path (145) and the fourth flow path (146) are in the open state.

In this case, preferably, in the quantifying, the processing liquid is reciprocatingly moved between the first flow path (141), the second flow path (144), and the inner cavity. According to this configuration, it is possible to suppress the gas from remaining in the quantification unit (143) during quantification since the gas pre-existing in the first flow path (141), the second flow path (144) and the inner cavity can be discharged from the quantification unit (143) by the reciprocating movement of the processing liquid (11). In this way it is possible to quantify the processing liquid (11) more accurately.

In the configuration in which the sample processing chip (100) has the quantification unit (143), it is preferable that the sample processing chip (100) comprises a plurality of quantification units (143a, 143b) and reservoirs (110a, 110b) connected in series along the flow of the processing liquid (11). The method further comprises further diluting mixed solution containing the target component (10) diluted by one of the plurality of quantification units (143a, 143b) and one of the plurality of reservoirs (110a, 110b), by other of the plurality of quantification units (143a, 143b) and other of the plurality of reservoirs (110a, 110b) in a subsequent stage. According to this configuration, it is possible to effectively increase the dilution ratio by diluting in a plurality of stages.

In the sample processing method according to the first aspect, in the storing, a dilution ratio of the target component (10) is 10 times or more and 100,000 times or less. According to this configuration, the target component (10) can be diluted at a dilution ratio for dividing the target component (10) into one molecule or one component.

In the sample processing method according to the first aspect, preferably, the diluent (12) comprises a reagent (16) that reacts with the target component (10). According to this configuration, the target component (10) can be reacted and processed by the reagent (16) in a later process.

In this case, preferably, the method further comprises delivering the reagent (16) to the reservoir (110) that stores target component (10) and the diluent (12). According to this configuration, it is possible to mix the reagent (16) in addition to diluting the target component (10) via the reservoir (110).

In the configuration in which the reagent (16) reacting with the target component (10) is sent to the reservoir (110), the sample processing chip (100) preferably comprises a reagent quantification unit (143). The method further comprises delivering the reagent (16) quantified using the reagent quantification unit (148) to the reservoir (110).

In the sample processing method according to the first aspect, preferably, further comprises forming droplets (14) individually encapsulating the target component (10) contained in the prepared droplet forming sample (13) in a dispersion medium (15).

In the sample processing method according to the first aspect, preferably, the target component (10) is a component to be processed after pretreatment obtained by processing the sample. According to this configuration, the processing liquid (11) containing the target component (10) subjected to the pretreatment can be easily diluted by the reservoir (110).

In this case, preferably, the target component (10) is a nucleic acid, and the pretreatment of the target component (10) is a process of amplifying a nucleic acid in the sample. According to this configuration, the treatment liquid (11) containing the nucleic acid amplified as the target component (10) can be easily diluted by the reservoir (110).

In the configuration in which the target component (10) is a component to be processed after the pretreatment, preferably, the sample processing chip (100) has a processing flow path (150) for performing the pretreatment of the target component (10), and stores the target component (10) after the pretreatment in the reservoir (110). According to this configuration, after the pretreatment is performed by the processing flow path (150) of the sample processing chip (100), the processing liquid (11) can be sent to the reservoir (110) for dilution.

In the sample processing method according to the first aspect, preferably, a droplet (14) containing the prepared droplet forming sample (13) is formed in a dispersion medium (15). According to this configuration, the diluted processing liquid (11) can be made into droplets (14) in the dispersion medium (15).

In this case, preferably, the process of forming the droplet (14) containing the droplet forming sample (13) in the dispersing medium (15) is performed by the droplet forming flow path (180) provided with a first channel (181) through which the droplet forming sample (13) flows, a second channel (182) through which a dispersion medium (15) that is immiscible with the droplet forming sample (13) flows, and an intersection part (183) where the first channel (181) and the second channel (182) intersect each other. According to this configuration, the droplet forming sample (13) can be readily made into droplets (14) in the dispersion medium (15) by the droplet formation flow path (180).

In the configuration in which the droplet formation sample (13) is formed as a droplet (14) in the dispersion medium (15), the sample processing chip (100) preferably also includes a droplet formation flow path (180) and supplies a predetermined amount of the droplet forming sample (13) to the droplet formation flow path (180). According to this configuration, after diluting the processing liquid (11) by the reservoir (110), the droplet forming sample (13) is diluted by the droplet forming flow path (180) of the sample processing chip (100) to form droplets (14) in the dispersion medium (15).

In this case, preferably, the reservoir (110) and the droplet forming flow path (180) are provided separately in the sample processing chip (100). According to this configuration, dilution of the processing liquid (11) and formation of the droplet (14) can be performed by separate sample processing chips (100).

In the configuration in which the sample processing chip (100) has the droplet forming flow path (180), preferably, the reservoir (110) and the droplet forming flow path (180) are integrally connected to the sample processing chip (100). According to this configuration, the number of parts can be reduced as compared to when the reservoir (110) and the droplet forming channel (180) are provided in separate sample processing chips.

In the configuration in which the process of forming the droplet forming sample (13) as a droplet (14) in the dispersion medium (15) is performed by the droplet forming flow path (180), it is preferable that the sample includes a plurality of types of target components (10), and that the sample processing chip (100) has a plurality of droplet forming flow paths (180), and the amount of the droplet forming sample (13) to be supplied for each type of the target component (10) is calculated according to the abundance of the target component (10) type in the droplet forming sample (13), and the calculated amount of the droplet forming sample (13) of each type is supplied to a droplet forming flow path (180) provided for each type of target component (10). According to this configuration, it is possible to form droplets (14) of plural types of target components (10) in parallel using the sample processing chip (100).

In the sample processing method according to the first aspect, preferably, a reservoir (110c) is formed in a flat plate-like sample processing chip (100), and the sample processing chip (100) is arranged with the main plane of the sample processing chip (100)intersects the horizontal direction so that a gas is introduced from the bottom of the reservoir (110c) and agitates the processing liquid (11) and the diluent (12) by the rising gas in the reservoir (110c). According to this configuration, since the sample processing chip (100) can be formed in a flat plate shape, it is possible to reduce the size as compared with when providing a tubular storage tank.

In the sample processing method according to the first aspect, preferably, a predetermined amount of processing liquid (11) is stored in the reservoir (110) by controlling the flow rate and time of the processing liquid (11) that contains the target component (10) to be sent to the reservoir (110). According to this configuration, it is possible to quantify the processing liquid (11) without providing a space for quantification, so that it is possible to reduce the size of the sample processing chip (100).

A sample processing method according to a first example is a sample processing method for processing a target component (10) in a sample, the method including storing a processing liquid (11) containing a target component (10) and a diluent (12) for diluting the processing liquid (11) in a reservoir (110) of the sample processing chip (100), preparing a droplet forming sample (13) by agitating the processing liquid (11) and a diluent (12) in the reservoir (110) by introducing a gas into the reservoir (110), and forming a droplet (14) containing one molecule or one target component (10) contained in the prepared droplet forming sample (13) in the dispersion medium (15).

According to the sample processing method of the first example , since the processing liquid (11) and the diluent (12) in the reservoir (110) can be mixed by the gas introduced into the reservoir (110) by configuring as described above (Bubbles), it is not necessary to heat the reservoir (110) and it is possible to reduce the time required for agitation as compared with when using thermal convection. In this way it is possible to obtain a desired diluted mixed solution by agitating for a short time. The diluted processing liquid (11) also can be made into droplets (14) in the dispersion medium (15).

In the sample processing method according to the first example, preferably, the dilution ratio of the target component (10) is 10 times or more and 100,000 times or less. According to this configuration, the target component (10) can be diluted at a dilution ratio for dividing the target component (10) into one molecule or one component.

In the sample processing method according to the first example, preferably, the droplet (14) is formed in the dispersion medium (15) with a sample processing chip different from the sample processing chip (100) having the reservoir (110). According to this configuration, dilution of the processing liquid (11) and formation of the droplet (14) can be performed by separate sample processing chips (100).

A sample processing chip (100) according to a second aspect of the present invention is defined in claim 13.

According to the sample processing chip (100) of the second aspect, since the processing liquid (11) and the diluent (12) in the reservoir (110) are agitated by the gas (bubbles) introduced into the reservoir (110) by configuration as described above, it is not necessary to heat the reservoir (110), and it is possible to shorten the time required for agitation as compared with when using thermal convection. In this way it is possible to obtain a desired diluted mixed solution by agitating for a short time. Since heating is not performed, it also is possible to suppress the target component (10) from changing due to heat.

In the sample processing chip (100) according to the second aspect, the reservoir (110) is formed by a tubular storage tank. According to this configuration, as compared with the case where the reservoir (110) is provided in the substrate (140) of the sample processing chip (100), the cross sectional area of the portion through which the gas passes can be increased so that the gas can easily pass through into the storage tank. In this way agitation can be performed in a shorter time.

In this case, preferably, the storage tank has an inlet (112) at the bottom portion, and the inlet (112) is arranged at a position where the central axis deviates from the central axis of the storage tank. According to this configuration, since the gas bubbles can be supplied from a position deviated from the center axis of the storage tank, it is possible to suppress the bubbles from contacting the entire circumference of the inner surface of the storage tank. In this way it is possible to suppress the liquid in the storage tank from rising from the liquid surface together with the bubbles, so that the liquid can be prevented from flowing out from the storage tank. As a result, contamination can be effectively suppressed

In the configuration in which the reservoir (110) is formed by a tubular storage tank, it is preferable that a quantification unit (143) also is provided to quantify the processing liquid (11) sent to the reservoir (110). According to this configuration, it is possible to easily quantify a certain amount of processing liquid (11) for obtaining a diluted mixture with a desired dilution ratio by the quantification unit (143).

In this case, it is preferable that the substrate (140) on which the quantification unit (143) is provided, the quantification unit (143), and the reservoir (110) are connected and a first flow path is provided to move the processing liquid (11) from the quantification unit (143) to the reservoir (110), and that a storage tank of the reservoir (110) is connected on the substrate (140). According to this configuration, a predetermined amount of processing liquid (11) can be supplied from the quantification unit (143) provided on the substrate (140) to the storage tank connected on the substrate (140).

In the configuration including the substrate (140), preferably, the quantification unit (143) includes an inner cavity having a predetermined capacity formed on the substrate (140), and also includes a first flow path (141) connected to an inlet (141a) of the processing liquid (11), a second flow path (144) connected to a disposal port (144a), a third flow path (145) as a first connection flow path connected to the reservoir (110), and a fourth flow path (146) connected to a gas supply unit (202) for feeding a gas, wherein an on/off valve (147a, 147b, 147c, 147d) is respectively provided in each of the first flow passage (141), the second flow passage (144), the third flow passage (145) and the fourth flow passage (146). According to this configuration, the processing liquid (11) is quantified by the quantification unit (143) and the quantified processing liquid (11) is stored in the reservoir (110) by opening and closing the on/off valves (147a, 147b, 147c, 147d).

In the configuration in which the reservoir (110) is formed by a tubular storage tank, the storage tank preferably is formed so that its inner side surface is hydrophilic. According to this configuration, since enlargement of the bubbles in a state where the bubbles are attached to the inner side surface can be suppressed, it is possible to prevent the bubbles from contacting the entire circumference of the inner surface of the storage tank. In this way it is possible to suppress the liquid in the storage tank from rising from the liquid surface together with the bubbles, so that the liquid can be prevented from flowing out from the storage tank. As a result, contamination can be effectively suppressed.

In the configuration in which the reservoir (110) is formed by a tubular storage tank, the storage tank preferably is formed so that the cross sectional area in the horizontal direction becomes larger toward the upper part of the storage tank. According to this configuration, it is difficult for the rising bubble to come into contact with the inner side surface of the storage tank, so that it is possible to suppress the liquid in the storage tank from rising together with the bubbles rising from the liquid surface.

In the configuration in which the reservoir (110) is formed by a tubular storage tank, preferably, the storage tank has an inner cylinder (160) for allowing the introduced gas to ascend through the inside. According to this configuration, it is possible to suppress the liquid in the storage tank from rising above the liquid surface together with the bubbles since a pathway for bubbles is formed.

In the configuration including the quantification unit (143), it is preferable that a processing flow path (150) for pretreating the target component (10) in the sample, and a second flow path for the pretreated target component (10) from the processing flow path (150) to the quantification unit (143) are provided. According to this configuration, it is possible to quantify a desired amount of processing liquid (11) by transferring the processing liquid (11) containing the target component (10) subjected to the pretreatment to the quantification unit (143).

In the sample processing chip (100) according to the second aspect, it is preferable that a droplet forming flow path (180) for forming droplets (14) encapsulating the droplet forming sample (13) in the dispersion medium (15), and a third connection flow path for transferring the droplet forming sample (13) from the reservoir (110) to the droplet forming flow path (180) are provided; and a droplet forming quantification unit (185a, 185b, 185c, 185d) is provided in the third connection flow path. According to this configuration, it is possible to quantify the diluted processing liquid (11) and supply a desired amount to the droplet forming flow path (180), so that the desired droplet (14) can be readily formed.

A sample processing chip (100) according to a second example of the present invention is a sample processing chip (100) installed in a sample processing apparatus (200) and configured to prepare a droplet forming sample (13) containing a target component (10) in a sample supplied from the sample processing apparatus (200), and includes a reservoir (110) for storing a processing liquid (11) containing a target component (10), and a diluent (12) for diluting the processing liquid (11) for encapsulating one molecule or one component in a droplet (14), an inlet (112) for introducing a gas to the reservoir (110) disposed below the storage tank, and a filter (113) permeable to the gas disposed above the storage tank

According to the sample processing chip (100) of the second example, since the processing liquid (11) and the diluent (12) in the reservoir (110) are agitated by the gas (bubbles) introduced into the reservoir (110) by the configuration as described above, it is not necessary to heat the reservoir (110), and it is possible to shorten the time required for agitation as compared with when using thermal convection. In this way it is possible to obtain a desired diluted mixed solution by agitating for a short time. Since heating is not performed, it also is possible to suppress the target component (10) from changing due to heat. When a gas is introduced into the storage tank, the liquid in the storage tank also can be prevented from leaking to the outside by the filter (113), so contamination can be effectively suppressed.

In the sample processing chip (100) according to the second example, the filter (113) preferably is formed of a polymer containing fluorine. According to this configuration, it is possible to effectively prevent the liquid from passing through the filter (113).

In the sample processing chip (100) according to the second example, the inlet (112) preferably is disposed at a position at which the central axis deviates from the central axis of the storage tank. According to this configuration, since the gas bubbles can be supplied from a position deviated from the center axis of the storage tank, it is possible to suppress the bubbles from contacting the entire circumference of the inner surface of the storage tank. In this way it is possible to suppress the liquid in the storage tank from rising from the liquid surface together with the bubbles, so that the liquid can be prevented from flowing out from the storage tank. As a result, contamination can be effectively suppressed.

A sample processing chip (100) according to a third example of the present invention is a sample processing chip (100) installed in a sample processing apparatus (200) for processing a target component (10) in a sample supplied by the sample processing apparatus (200), and includes a reservoir (110) for storing a processing liquid (11) containing a target component (10) and a diluent (12) for diluting the processing liquid (11), a gas supply unit (111) for supplying a gas into the reservoir (110), and a droplet forming flow path (180) for forming a droplet (14) encapsulating, in a dispersion medium (15), one molecule or one component of the target component (10) contained in the droplet forming sample (13) prepared by dilution in the reservoir (110).

According to the sample processing chip (100) of the third example, since the processing liquid (11) and the diluent (12) in the reservoir (110) are agitated by the gas (bubbles) introduced into the reservoir (110) by the configuration as described above, it is not necessary to heat the reservoir (110), and it is possible to shorten the time required for agitation as compared with when using thermal convection. In this way it is possible to obtain a desired diluted mixed solution by agitating for a short time. The diluted processing liquid (11) also can be made into droplets (14) in the dispersion medium (15).

A sample processing apparatus (200) according to a fourth example of the present invention comprises an installation unit (201) configured to be installed the sample processing chip (100) according to the third, fourth, or fifth aspect, and a supply unit (203) configured to supply the processing liquid (11) and the gas to the reservoir (110) of the sample processing chip (100).

In a sample processing apparatus (200) of the fourth example, since the processing liquid (11) and the diluent (12) in the reservoir (110) are agitated by the gas (bubbles) introduced into the reservoir (110) by the configuration as described above, it is not necessary to heat the reservoir (110), and it is possible to shorten the time required for agitation as compared with when using thermal convection. In this way it is possible to obtain a desired diluted mixed solution by agitating for a short time. Since heating is not performed, it also is possible to suppress the target component (10) from changing due to heat.

The sample processing apparatus (200) according to the fourth example preferably also includes a heating unit (207) for adjusting the temperature of the processing flow path (150) for pretreatment in the sample processing chip (100). According to this configuration, it is possible to dilute the processing liquid (11) by the reservoir (110) after performing pretreatment by heating.

In the sample processing apparatus (200) according to the fourth example, preferably, the sample processing chip (100) held by the chip holder (170) is installed as a cartridge (300) in the installation unit (201). According to this configuration, a plurality of samples can be processed in parallel by holding a plurality of sample processing chips (100) in the chip holder (170).

In this case, preferably, the chip holder (170) is formed in a frame shape provided with a hole (171) penetrating in the vertical direction, and holds the sample processing chip (100) by the frame. According to this configuration, since it is possible to access the sample processing chip (100) from both the upper side and the lower side, the heating unit (207) can be brought into contact with the sample processing chip (100) from the lower side, for example.

In the sample processing apparatus (200) according to the fourth example, preferably, the sample processing chip (100) is provided with a quantification unit (143) formed by an inner cavity having a predetermined capacity, a first flow path (141), a second flow path (144), a third flow path (145), and a fourth flow path (146) connected to the inner cavity and having an on/off valve (147a, 147b, 147c, 147d), wherein the first flow path (141) is connected to the inlet (141a) of the processing liquid (11), the second flow path (144) is connected to the disposal port (144a), the third flow path is connected to the reservoir (110), the fourth flow path (146) is connected to the supply unit (203) for supplying a gas; and a pressing part (206) for opening and closing the on/off valve (147a) of the first flow path (141), the on/off valve (147b) of the second flow path (144), the on/off valve (147c) of the third flow path (145), and the on/off valve (147d) of the fourth flow path (146). According to this configuration, the processing liquid (11) is quantified by the quantification unit (143) and the quantified processing liquid (11) is stored in the reservoir (110) by opening and closing the on/off valves (147a, 147b, 147c, 147d) via the pressing part (206).

In this case, it is preferable that a predetermined amount of processing liquid (11) is delivered to the reservoir (110) by feeding the processing liquid (11) from the first flow path (141) to fill the inner cavity of the quantification unit (143) when the first flow path (141) and the second flow path(144) are open and the third flow path (145) and the fourth flow path (146) are closed by the pressing unit (206), and feeding the processing liquid (11) filling the inner cavity of the quantification unit (143) via the supply unit t(203) to the reservoir (110) when the first flow path (141) and the second flow path (144) are closed and the third flow path (145) and the fourth flow path (146) are open by the pressing part (206). According to this configuration, the processing liquid (11) is accurately quantified by introducing the processing liquid (11) into the inner cavity when the first flow path (141) and the second flow path (144) are in an open state, and the quantified processing liquid (11) can be delivered to the reservoir (110) without residual when the third flow path (145) and the fourth flow path (146) are in the open state.

The sample processing apparatus (200) according to a fifth example of the present invention includes an installation unit (201) where a sample processing chip (100) for preparing a droplet forming sample (13) containing a target component (10) in a sample is installed, and a supply unit (203) for supplying the processing liquid (11) containing the target component (10) and a gas to the reservoir (110) of the sample processing chip (100), wherein the supply unit (203) introduces a gas into the reservoir (110) for a predetermined time of 0.1 second or more and 60 seconds or less.

In a sample processing apparatus (200) of the fifth example, since the processing liquid (11) and the diluent (12) in the reservoir (110) are agitated by the gas (bubbles) introduced into the reservoir (110) by the configuration as described above, it is not necessary to heat the reservoir (110), and it is possible to shorten the time required for agitation as compared with when using thermal convection. In this way it is possible to obtain a desired diluted mixed solution by agitating for a short time.

The invention makes it possible to obtain a desired diluted mixture.

### BRIEF DESCRIPTION OF THE DRAWINGS

FIG. 1 is a diagram showing an example of a sample processing method;
FIG. 2 is a diagram showing an example of a sample processing apparatus;
FIG. 3 is a perspective view showing a structural example of a sample processing chip;
FIG. 4 is a plan view showing a structural example of a substrate of a sample processing chip;
FIG. 5 is a plan view showing a structural example of a fluid module;
FIG. 6 is a longitudinal sectional view showing a structural example of a sample processing chip;
FIG. 7 is a diagram illustrating a first example of a sample processing method;
FIG. 8 is a diagram illustrating a second example of a sample processing method;
FIG. 9 is a diagram illustrating a third example of a sample processing method;
FIG. 10 is a diagram illustrating a fourth example of a sample processing method;
FIG. 11 is a diagram illustrating a fifth example of a sample processing method;
FIG. 12 is a perspective view showing a structural example of a sample processing chip;
FIG. 13 is a plan view showing the sample processing chip of FIG. 12;
FIG. 14 is a cross-sectional view showing a first example of a reservoir;
FIG. 15 is a cross-sectional view showing a second example of a reservoir;
FIG. 16 is a cross-sectional view showing a third example of a reservoir;
FIG. 17 is a cross-sectional view showing a fourth example of a reservoir;
FIG. 18 is a view showing an on/off valve;
FIG. 19 is a perspective view showing a cartridge including a plurality of sample processing chips;
FIG. 20 is a plan view showing a chip holder;
FIG. 21 is a front view showing a cartridge including a plurality of sample processing chips;
FIG. 22 is a view illustrating the dilution process in a reservoir;
FIG. 23 is a view showing a first example of a droplet forming flow path;
FIG. 24 is a view showing a second example of a droplet formation flow path;
FIG. 25 is a view showing a third example of a droplet forming flow path;
FIG. 26 is a view showing a fourth example of a droplet forming flow path;
FIG. 27 is a view showing a fifth example of a droplet formation flow path;
FIG. 28 is a view showing a droplet forming flow path;
FIG. 29 is a block diagram showing a structural example of a sample processing apparatus;
FIG. 30 is a diagram showing a structural example of an installation unit;
FIG. 31 is a diagram showing a structural example of a connector;
FIG. 32 is a flowchart showing sample processing by the sample processing apparatus;
FIG. 33 is a flow chart showing an example of an emulsion PCR assay;
FIG. 34A, FIG. 34B, FIG. 34C, FIG. 34D, FIG. 34E, FIG. 34F, FIG. 34G, and FIG. 34H, are view illustrating the progress of a reaction in an emulsion PCR assay;
FIG. 35 is a diagram for explaining examples;
FIG. 36 is a view showing the results of examples;
FIG. 37 is a diagram showing the results of a comparative example;
FIG. 38 is a view showing the results of Examples and Comparative Examples; and
FIG. 39 is a diagram illustrating a sample processing method in a conventional technique.

### DESCRIPTION OF THE EMBODIMENTS OF THE INVENTION

Hereinafter, embodiments will be described with reference to the drawings.

### Overview of Sample Processing Method

An outline of a sample processing method according to an embodiment will be described with reference to the drawings.

The sample processing method according to the present embodiment is a sample processing method for processing a target component 10 in a sample using a sample processing chip 100 having a reservoir 110.

The sample processing chip 100 is configured to be capable of receiving a processing liquid 11 containing the target component 10, and is set in the sample processing apparatus 200 to thereby allow the sample processing apparatus 200 to perform sample processing using the cartridge type sample processing chip. The sample processing chip 100 also is a microfluidic chip having fine flow paths for performing desired processing steps. The flow path is, for example, a microchannel having a sectional dimension (width, height, inner diameter) of 0.1 µm to 1000 µm.

A sample obtained by collecting a fluid such as a body fluid and blood (whole blood, serum or plasma) from a patient and applying predetermined pretreatment to the collected body fluid or blood is injected into a sample processing chip 100. The target component 10 may be, for example, nucleic acids such as DNA (deoxyribonucleic acid), cells and intracellular substances, antigens or antibodies, proteins, peptides and the like. For example, when the target component 10 is a nucleic acid, an extract liquid from which nucleic acid is extracted by a predetermined pretreatment from blood or the like is injected into the sample processing chip 100.

The sample containing the target component 10 injected into the sample processing chip 100 is delivered into the sample processing chip 100 by the sample processing apparatus 200. In the course of delivering the sample, the processing of the target component 10 by one or a plurality of steps is performed in a predetermined order. As a result of the processing of the target component 10, a measurement sample suitable for analyzing a sample or a liquid sample suitable for processing using another apparatus is generated in the sample processing chip 100.

In the sample processing method of the present embodiment, the processing liquid 11 containing the target component 10 is diluted so that a molecule or one component of the target component 10 is contained in a droplet 14. That is, the droplet forming sample 13 for forming the droplet 14 including the target component 10 is prepared by diluting the target component 10. The droplets 14 are formed dispersed in a dispersion medium 15 such as oil. The droplet 14 includes not only the droplet forming sample 13 containing the target component 10 but also the reagent 16 for reacting with the target component 10. The reagent 16 includes, for example, a primer 17, a carrier 18, and the like.

In the present embodiment, the processing liquid 11 containing the target component 10 and the diluent 12 are stored in a reservoir 110. Then, by introducing gas into the reservoir 110, the processing liquid 11 and the diluent 12 in the reservoir 110 are agitated to dilute the processing liquid 11. In this way the droplet forming sample 13 for forming the droplet 14 including the diluted target component 10 is prepared.

Accordingly, since the processing liquid 11 and the diluent 12 in the reservoir 110 can be agitated by the gas (bubbles) introduced into the reservoir 110, it is unnecessary to heat the reservoir 110 and possible to shorten the time required for agitation as compared to using thermal convection. As a result, it is possible to obtain a desired diluted mixture by agitating a short time.

By introducing a gas into the reservoir 110 for a predetermined time of 0.1 second or more and 60 seconds or less, the processing liquid 11 and the diluent 12 are agitated. For example, by introducing a gas into the reservoir 110 with a pressure of 100 mbar or more and 1000 mbar or less, the processing liquid 11 and the diluent 12 are agitated.

The dilution ratio of the target component 10 is 10 times or more and 100,000 times or less. In this way the target component 10 can be diluted at a dilution ratio for dividing the target component 10 into one molecule or one component.

In addition, the diluent 12 may contain a reagent 16 that reacts with the target component 10. In this way the target component 10 can be reacted and processed by later processing.

### Overview of Sample Processing Chip

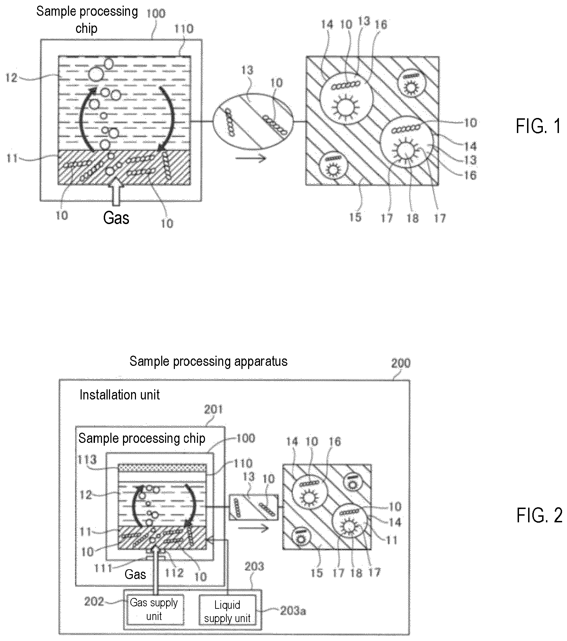

An outline of the sample processing chip 100 according to the present embodiment will be described with reference to FIG. 2.

The sample processing chip 100 according to the present embodiment is a sample processing chip installed in a sample processing apparatus 200 for preparing a droplet forming sample 13 containing a target component 10 in a sample supplied from a sample processing apparatus 200.

The sample processing chip 100 also includes a reservoir 110 for storing a processing liquid 11 containing a target component 10 and a diluent 12 for diluting the processing liquid 11 so that one molecule or one component of the target component 10 is contained in the droplet 14, and a gas supply unit 111 for supplying a gas into the reservoir 110. Accordingly, since the processing liquid 11 and the diluent 12 in the reservoir 110 can be agitated by the gas (bubbles) introduced into the reservoir 110, it is unnecessary to heat the reservoir 110 and possible to shorten the time required for agitation as compared to using thermal convection. In this way it is possible to obtain a desired diluted mixed solution by agitating for a short time.

The sample processing chip 100 also includes a reservoir 110 having a tubular storage tank for storing a processing liquid 11 containing a target component 10, and a diluent 12 for diluting the processing liquid 11 to encapsulate one molecule or one component of the target component 10 in a droplet 14, an inlet 112 disposed below the reservoir to introduce gas into the reservoir 110, and a filter 113 permeable to the gas and disposed above the storage tank. In this way, when the gas is introduced into the storage tank, the liquid in the storage tank can be prevented from leaking to the outside by the filter 113, so contamination can be effectively suppressed.

### Overview of Sample Processing Apparatus

The outline of the sample processing apparatus 200 according to the present embodiment will be described with reference to FIG. 2.

The sample processing apparatus 200 according to the present embodiment is a sample processing apparatus for processing a target component 10 in a sample by using a sample processing chip 100.

The sample processing apparatus 200 also is provided with an installation unit 201 for installing the sample processing chip 100, a supply unit 203 that supplies the processing liquid 11 containing the target component 10 and the gas to the reservoir 110 of the sample processing chip 100. The supply unit 203 includes a gas supply unit 202 that supplies gas to the reservoir 110 of the sample processing chip 100, and a liquid supply unit 203a that supplies the processing liquid 11 to the reservoir 110 of the sample processing chip 100. Accordingly, since the processing liquid 11 and the diluent 12 in the reservoir 110 can be agitated by the gas (bubbles) introduced into the reservoir 110, it is unnecessary to heat the reservoir 110 and possible to shorten the time required for agitation as compared to using thermal convection. In this way it is possible to obtain a desired diluted mixed solution by agitating for a short time. The gas supply unit 202 and the liquid supply unit 203a may be integrally provided and may function as the supply unit 203. The gas supply unit 202 and the liquid supply unit 203a also may be provided separately and may function as the supply unit 203.

### Structural Examples of Sample Processing Chip

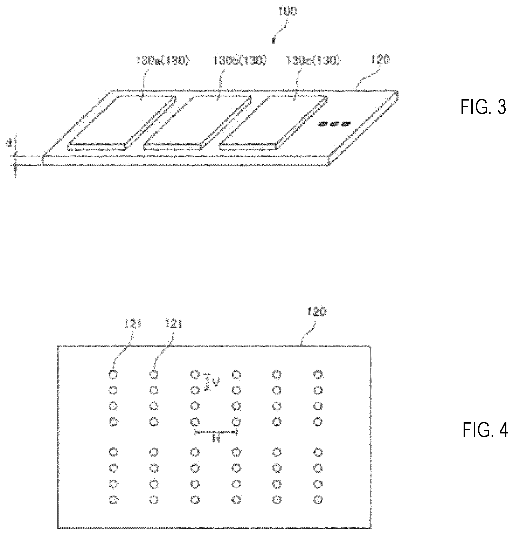

FIG. 3 shows a structural example of the sample processing chip 100 according to this embodiment. A plurality of types of fluid modules 130 having different functions are installed on a substrate 120. In the example of FIG. 3, the liquid containing the sample flows through the fluid modules 130a, 130b, and 130c sequentially, so that assays corresponding to combinations of plural kinds of fluid modules are executed. Each of the fluid modules 130a, 130b, 130c is a different type of fluid module. By changing the combination of the fluid modules 130 installed on the substrate 120, various assays can be carried out according to the modules. There is no limit to the number of fluid modules 130 installed on the substrate 120. The shape of the fluid module 130 may be different for each type.

FIG. 4 shows a structural example of the substrate 120. The substrate 120 has a plurality of substrate flow paths 121. The substrate 120 has a flat plate shape and has a first surface and a second surface which are main surfaces. The second surface is a surface opposite to the first surface. For example, the substrate 120 may be formed of resin or glass.

The thickness d of the substrate 120 is, for example, 1 mm or more and 5 mm or less. In this way the substrate 120 can be formed to have a sufficiently large thickness as compared with the flow path height (on the order of 10 µm to 500 µm) of the flow path formed in the fluid module 130. As a result, sufficient pressure resistance performance readily can be ensured for the substrate 120.

The substrate flow path 121 is, for example, a through-hole that penetrates the substrate 120 in the thickness direction. In addition to being connected to the flow path of the fluid module 130, the substrate flow path 121 functions as a port for supplying a liquid or a reagent into the sample processing chip 100 or as a port for recovering the liquid from inside the sample processing chip 100.

In the example of FIG. 4, the substrate 120 has two sets of substrate flow channels 121 of 4 rows x 6 columns. The number of substrate flow channels 121 and number of groups thereof provided in the substrate 120 are not limited to the example of FIG. 4.

The substrate flow paths 121 are arranged at a predetermined pitch, for example. In the example of FIG. 4, each substrate flow path 121 is arranged at a pitch V in the vertical direction and pitch H in the horizontal direction. In this case, the fluid module 130 can be disposed on the substrate 120 at an arbitrary position on a pitch unit basis so as to be connected to an optional substrate flow path 121. The substrate flow path 121 also may be formed only at positions required for connection with the various fluid modules 130 arranged on the substrate 120.

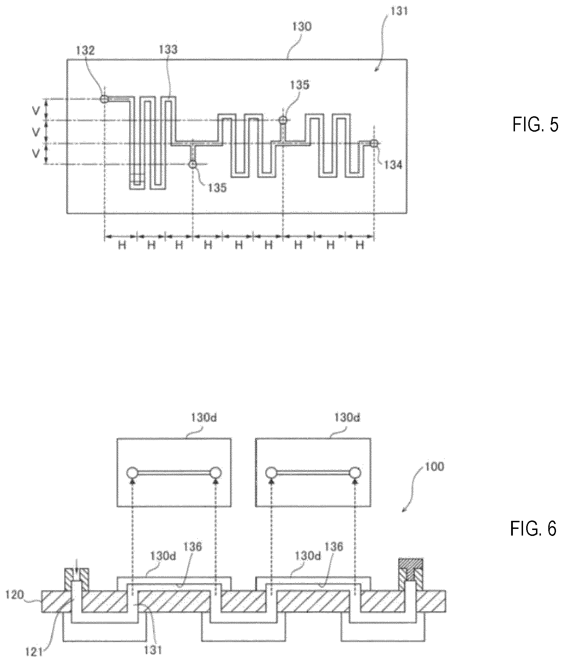

FIG. 5 shows a structural example of the fluid module 130. The connection parts 132, 134, and 135 are arranged on the fluid module 130 so as to coincide with the pitch of the substrate flow paths 121 of the substrate 120. That is, the connecting parts 132, 134, and 135 are disposed on the fluid module 130 at a pitch that is an integral multiple of the pitches V and H of the substrate flow path 121 of the substrate 120. The channel 133 is arranged to connect between the connecting portions 132, 134, and 135 arranged at a predetermined pitch. A plurality of pairs of connection parts 132, 134, and 135 arranged at a predetermined pitch and a channel 133 may be arranged in the fluid module 130.

Each fluid module 130a-130c may have a different flow path shape. Each fluid module 130 may be disposed not only on the first surface but also on the second surface or only on the second surface.

In the structural example of FIG. 6, the sample processing chip 100 further includes a fluid module 130d. The fluid module 130d is disposed on a second side opposite to the first side of the substrate 120 on which the fluid module 130d is disposed. The fluid module 130d includes a flow path 136 and is a connection module having a function of connecting the fluid modules 130 to each other. Note that a flow path structure corresponding to the connection module also may be formed on the substrate 120.

Each fluid module 130 (including a connection module) is connected to, for example, the substrate 120 by solid phase bonding. For the solid phase bonding, for example, a method in which the bonding surface is subjected to plasma treatment to form OH groups, and bonding surfaces are joined to each other by hydrogen bonding, or a method such as vacuum pressure welding or the like can be adopted. The fluid module 130 and the substrate 120 can be firmly bonded by solid phase bonding. The fluid module 130 also may be connected to the substrate 120 by an adhesive or the like.

In the example of FIG. 6, the substrate flow path 121 of the substrate 120 functions as a port for injecting liquid. In addition, the substrate flow path 121 of the substrate 120 functions as a port for collecting liquid. Any number of ports may be provided.

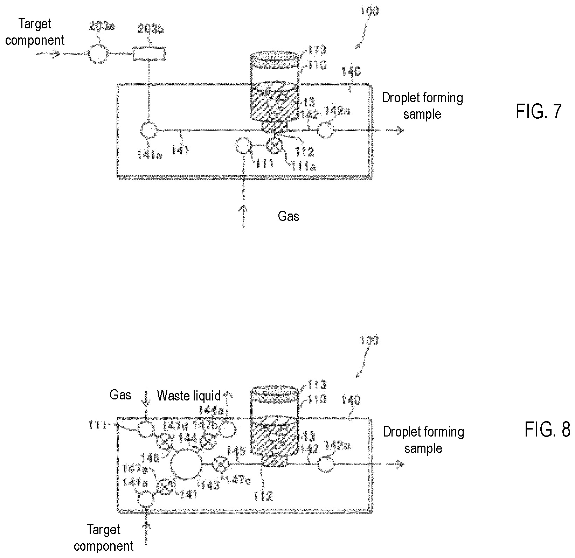

In the structural example of FIG. 7, the sample processing chip 100 is provided on the substrate 140. Specifically, the sample processing chip 100 includes a reservoir 110, a gas supply unit 111, a first flow path 141, and a flow path 142. In the reservoir 110, an inlet 112 and a filter 113 are provided. An on/off valve 111a is provided in the gas supply unit 111. In the first flow path 141, an inlet 141a is provided. In the flow path 142, a droplet forming sample supply unit 142a is provided. A liquid supply unit 203a for supplying the target component 10 is connected to the inlet 141a. A flow rate sensor 203 b is provided between the inlet 141a and the liquid supply unit 203a.

The reservoir 110 is a tubular reservoir connected to the substrate 140 of the sample processing chip 100. The processing liquid 11 and the diluent 12 are agitated by introducing gas from the bottom of the storage tank of the reservoir 110 and rising gas in the reservoir. In this way the cross sectional area of the portion through which the gas passes can be increased so that the gas can easily pass through into the storage tank as compared with when the reservoir (110) is provided in the substrate (140) of the sample processing chip (100). As a result, agitation can be performed in a shorter time.

The diluent 12 is placed In the reservoir 110 in advance. The processing liquid 11 containing the target component 10 is supplied to the reservoir 110 via the first flow path 141 by the liquid supply unit 203a. For example, a predetermined amount of the treatment liquid 11 is stored in the reservoir 110 by controlling the flow velocity and time of the processing liquid 11 containing the target component 10 to be sent to the reservoir 110. In this way it is possible to quantify the processing liquid 11 even without providing a space for quantification, so that it is possible to reduce the size of the sample processing chip 100.

In the state in which the processing liquid 11 and the diluent 12 are contained in the reservoir 110, gas is supplied from the gas supply unit 111. At this time, the on/off valve 111a is in the open state. Specifically, the gas is supplied into the reservoir 110 via the inlet 112 disposed at the bottom of the reservoir 110.

The filter 113 is permeable to gas. On the other hand, the filter 113 transmits liquid with difficulty. That is, the filter 113 allows gas to escape from above the reservoir 110 and does not to allow liquid to pass therethrough. The filter 113 is arranged so as to cover the upper part of the reservoir 110. That is, when the gas is introduced into the reservoir 110, it is possible to suppress the liquid from ascending the reservoir 110 and flowing out from the reservoir 110 as the gas rises. The filter 113 may be formed in a cap shape and arranged above the reservoir 110. The filter 113 is made of, for example, a fluorine-containing polymer or a water-absorbing polymer. In this way it is possible to effectively suppress the liquid from passing through the filter 113. The filter 113 may be formed of a porous member. The filter 113 also may be formed of a sponge-like material. The filter 113 also may be in the form of a film.

The droplet forming sample 13 prepared by the reservoir 110 is sent to the next step via the flow path 142. The liquid supply unit 203a includes, for example, a pump.

In the structural example of FIG. 8, the sample processing chip 100 is provided with a quantification unit 143 that quantifies the processing liquid 11. In the structural example of FIG. 8, the sample processing chip 100 includes a first flow path 141, a flow path 142, a second flow path 144, a third flow path145, a fourth flow path 146, and on/off valves 147a, 147b, 147c and 147d. In the structural example of FIG. 8, a supply unit 203 that integrally supplies the processing liquid 11 containing the target component 10 and the gas to the reservoir 110 of the sample processing chip 100 also is integrally provided. That is, the gas supply unit 202 for supplying a gas and the liquid supply unit 203a for feeding the liquid are provided as the common supply unit 203.

The processing liquid 11 quantified using the quantification unit 143 is sent to the reservoir 110. Specifically, the quantification unit 143 is formed by an inner cavity having a predetermined capacity formed in the sample processing chip 100. The treatment liquid 11 also is supplied to the quantification unit 143 via the first flow path 141. At this time, more treatment liquid 11 is supplied than the amount quantified by the quantification unit 143. The excess treatment liquid 11 is sent to the disposal port 144a via the second flow path 144. In this way the quantification unit 143 is filled with a predetermined amount of treatment liquid 11.

One end of the first flow path 141 is connected to the inlet 141a of the treatment liquid 11, and the other is connected to the quantification unit 143. The on/off valve 147a is provided in the first flow path 141. One end of the second flow path 144 is connected to the disposal port 144a, and the other end thereof is connected to the quantification unit 143. The second flow path 144 is provided on/off valve 147b. One end of the third flow path 145 is connected to the reservoir 110, and the other end thereof is connected to the quantification unit 143. The on/off valve 147c is provided in the third flow path 145. One end of the fourth flow path 146 is connected to the gas supply unit 202 that supplies gas via the gas supply unit 111, and the other end thereof is connected to the quantification unit 143. The on/off valve 147d is provided in the fourth flow path 146.

After storing the diluent 12 in the reservoir 110, the treatment liquid 11 is delivered to the reservoir 110 by gas. In this way it is possible to carry out the feeding of the treatment liquid 11 to the reservoir 110 and the introduction of the gas into the reservoir 110 continuously and in the same operation, so that the feeding and agitating the treatment liquid 11 can be performed in a short time as compared with when it is carried out by the first embodiment.

Specifically, the on/off valves 147a and 147b are opened to bring the first flow path 141 and the second flow path 144 into an open state. The on/off valves 147c and 147d are closed, and the third flow oath 145 and the fourth flow path 146 are closed. In this state, the treatment liquid 11 is fed from the first flow path 141 and fills the inner cavity of the quantification unit 143. Thereafter, the on/off valves 147a and 147b are closed, and the first flow path 141 and the second flow path 144 are closed. The on/off valves 147c and 147d are also opened, and the third flow path 145 and the fourth flow path 146 are opened. In this state, the treatment liquid 11 filling the inner cavity of the quantification unit 143 is sent by the gas from the gas supply unit 202. In this way a predetermined amount of the treatment liquid 11 is sent to the reservoir 110.

When the treatment liquid 11 is fed from the first flow path 141 and fills the inner cavity of the quantification unit 143, a fixed amount of the treatment liquid 11 also may be reciprocatingly moved between the first flow path 141, the second flow path 144, and the inner cavity of the quantification unit 143. In this way it is possible to suppress the gas from remaining in quantification unit 143 since the gas pre-existing in the inner cavity of the quantification unit 143 and the first flow path 141 is expelled from the quantification unit 143 by the reciprocating movement of the processing liquid 11. In this way it is possible to quantify the processing liquid (11) more accurately.

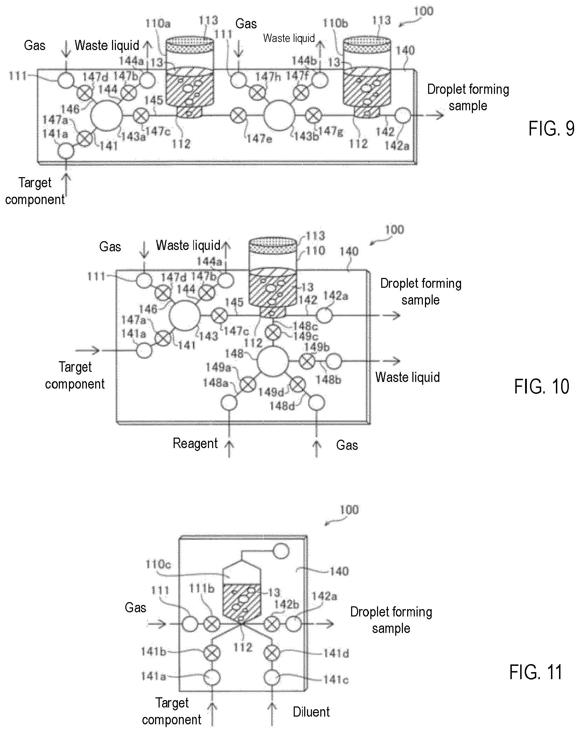

In the structural example of FIG. 9, the sample processing chip 100 is provided with a plurality of quantification units 143 and reservoirs 110. Specifically, in the sample processing chip 100, a quantification unit 143a and a reservoir 110a are provided on the upstream side in the flow direction of the treatment liquid 11 containing the target component 10. A quantification unit 143b and a reservoir 110b also are provided on the downstream side in the sample processing chip 100.

In the structural example of FIG. 9, the sample processing chip 100 includes a first flow path 141, a flow path 142, a second flow path 144, a third flow path 145, a fourth flow path 146, and on/off valves 147a, 147b, 147c, 147d, 147e, 147f, 147g, and 147h. In the quantification unit 143b, quantification of the treatment liquid 11 is performed in the same manner as the quantification unit 143a.

In the sample processing chip 100, a plurality of quantitative units 143 and reservoirs 110 are connected in series in this order along the flow of the treatment liquid 11. In the sample processing chip 100, the target component 10, which is diluted by the quantification part 143a and the reservoir 110 in an early stage, is further diluted by the quantitative part 143b and the reservoir part 110b in a latter stage. In this way it is possible to effectively increase the dilution ratio by a plurality of stages of dilution.

In the structural example of FIG. 10, the sample processing chip 100 is provided with a reagent quantification unit 148 that quantifies the reagent 16. In the structural example of FIG. 10, the sample processing chip 100 includes a first flow path 141, a flow path 142, a second flow path 144, a third flow path 145, a fourth flow path 146, and on/off valves 147a, 147b, 147c, and 147d, flow paths 148a, 148b, 148c, and 148d, and on/off valves 149a, 149b, 149c, and 149d.

In a state where the target component 10 and the diluent 12 are stored in the reservoir 110, the reagent 16 for reacting with the target component 10 also is delivered to the reservoir 110. In this way mixing of the reagent 16 can also be performed in addition to diluting the target component 10 by the reservoir 110.

Specifically, the treatment liquid 11 containing the target component 10 quantified by the quantification unit 143 is delivered to the reservoir 110 containing the diluent 12. Thereafter, the reagent 16 quantified by the reagent quantification unit 148 is sent to the reservoir 110. The reagent quantification unit 148 is configured by, for example, an inner cavity formed in the sample processing chip 100. The inner cavity of the reagent quantification unit 148 has a predetermined capacity. On/off valves 149a and 149b are opened to open the flow path 148a and the flow path 148b. The on/off valves 149c and 149d are closed to close the flow path 148c and the flow path 148d. In this state, the reagent 16 is sent from the flow path 148a and is loaded in the reagent quantification unit 148. Thereafter, the on/off valves 149a and 149b are closed to close the flow path 148a and the flow path 148b. The on/off valves 149c and 149d are also opened to open the flow path 148c and the flow path 148d. In this state, the reagent 16 loaded in the reagent quantification unit 148 by a gas. In this way a predetermined amount of the reagent 16 is sent to the reservoir 110.

In the structural example of FIG. 11, the reservoir 110c is formed in the flat plate-like sample processing chip 100. In a state in which the sample processing chip 100 is arranged so that the main plane of the sample processing chip 100 is in a direction intersecting with the horizontal direction, gas is introduced from the lower part of the reservoir 110c, and the gas rises in the reservoir 110c to agitate the treatment liquid 11 and the diluent 12. In this way it is possible to reduce the size since the sample processing chip 100 can be formed in a flat plate shape as compared with providing a tubular storage tank.

Note that the main surface of the sample processing chip 100 may stand perpendicular to the horizontal direction or may be inclined.

In the structural example of FIG. 11, the sample processing chip 100 includes a gas supply unit 111, an on/off valve 111b, an inlet 112, an inlet 141a, an on/off valve 141b, a diluent inlet 141c, an on/off valve 141d, a droplet forming sample supply unit 142a, and an on/off valve 142b. The gas supply unit 111 is a port for guiding the gas provided in the sample processing chip 100. The gas supply unit 111 may be configured by, for example, a tubular member. The gas supply unit 111 also may be configured by a through hole or a groove for guiding gas to the flow path of the sample processing chip 100.

The diluent 12 is introduced via the diluent inlet 141c to the reservoir 110c. At this time, the on/off valve 141d is in an open state, and the on/off valves 111b, 141b, and 142b are in a closed state. Thereafter, the processing liquid 11 containing the target component 10 is introduced into the reservoir 110c via the inlet 141a. At this time, the on/off valve 141b is in an open state, and the on-off valves 111b, 141d, and 142b are in a closed state. Gas is introduced into the reservoir 110c from the inlet 112 via the gas supply unit 111. In this way the processing liquid 11 and the diluent 12 are agitated, and the droplet forming sample 13 is adjusted. Thereafter, the droplet forming sample 13 is sent from the reservoir 110c to the droplet forming sample supply unit 142a. At this time, the on/off valve 142b is in an open state, and the on/off valves 111b, 141b, and 141d are in a closed state.

### Structure of Sample Processing Chip

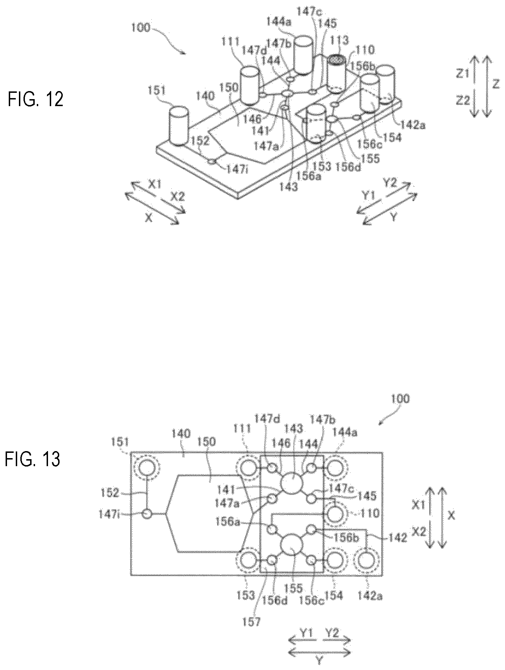

An example of the sample processing chip 100 according to the present embodiment will be described with reference to FIGS. 12 to 18.

In the examples of FIGS. 12 to 18, the sample processing chip 100 is provided with a reservoir 110 for agitating and diluting the processing liquid 11 and the diluent 12, a processing flow path 150 for pretreating the processing liquid 11 to be diluted, and a droplet forming sample supply unit 142a for supplying the droplet forming sample 13, which has been adjusted by diluting the processing liquid 11 for post processing. That is, in the examples of FIGS. 12 to 18, pretreatment of the target component 10 and dilution processing after pretreatment of the target component 10 are performed in the sample processing chip 100.

As shown in FIGS. 12 and 13, the sample processing chip 100 includes a reservoir 110, a gas supply unit 111, a first flow path 141, a flow path 142, a droplet forming sample supply unit 142a, a quantification unit 143, a second flow path 144, a disposal port 144a, a third flow path 145, a fourth flow path 146, and on/off valves 147a, 147b, 147c, 147d, 147i. The sample processing chip 100 also includes a processing flow path 150, a sample supply tank 151, a flow path 152, connection parts 153 and 154, an inner cavity 155, and on/off valves 156a, 156b, 156c, and 156d.

The reservoir 110, the gas supply unit 111, the droplet forming sample supply unit 142a, the disposal port 144a, the sample supply tank 151, and the connection parts 153 and 154 are connected to each other via a tubular tank. The reservoir 110, the gas supply unit 111, the droplet forming sample supply unit 142a, the disposal port 144a, the sample supply tank 151, and the connection parts 153 and 154 are provided with connection holes at the lower side, and have a tubular shape extending upward.

The first flow path 141, the flow path 142, the quantification unit 143, the second flow path 144, the third flow path 145, the fourth flow path 146, the on/off valves 147a, 147b, 147c, 147d, 146i, the processing flow path 150, the flow path 152, the inner cavity 155, and the on/off valves 156a, 156b, 156c, 156d are provided within or on the main surface of the substrate 140.

The sample supply tank 151 is connected to the processing flow path 150 via the flow path 152. The processing flow path 150 is connected to the quantification unit 143 via the first flow path 141. The quantification unit 143 is connected to the disposal port 144a via the second flow path 144. The quantification unit 143 also is connected to the reservoir 110 via the third flow path 145. The quantification unit 143 also is connected to the gas supply unit 111 via the fourth flow path 146.

The reservoir 110 is connected to the inner cavity 155 via the on-off valve 156a. The lumen 155 is connected to the droplet forming sample supply unit 142a via the on/off valve 156b. The inner cavity 155 is connected to the connecting part 154 via the on/off valve 156c. The inner cavity 155 also is connected to the connecting part 153 via the on/off valve 156d.

The reservoir 110, the gas supply unit 111, the disposal port 144a, the sample supply tank 151, and the connection parts 153 and 154 are connected to the gas supply unit 202 of the sample processing apparatus 200. In this way a positive pressure and a negative pressure can be supplied to the reservoir 110, the gas supply part 111, the disposal port 144a, the sample supply tank 151, and the connection parts 153 and 154.

The on/off valve 147a is provided in the first flow path 141. The second flow path 144 is provided on/off valve 147b. The on/off valve 147c is provided in the third flow path 145. The on/off valve 147d is provided in the fourth flow path 146. The on/off valve 147i is provided In the flow path 152. The third flow path 145 is used as a first connection flow path for moving the processing liquid 11 from the quantification unit 143 to the reservoir 110. The first flow path 141 is used as a second connection flow path for transferring the pretreated target component 10 from the processing flow path 150 to the quantification unit 143.

The sample containing the target component 10 is supplied to the sample supply tank 151. For example, the user may measure and supply a predetermined amount of sample with a pipette or the like, or the sample may be dispensed and supplied by the sample processing apparatus 200. The sample in the sample supply tank 151 is sent to the processing flow path 150 via the flow path 152 when a positive pressure is applied from the gas supply unit 202. At this time, the on/off valve 147i is in the open state.

In the processing flow path 150, pretreatment of the target component 10 is performed. For example, the pretreatment of the target component 10 may be a process of amplifying a nucleic acid in the sample. That is, the target component 10 sent to the reservoir 110 is a component to be processed after the pretreatment obtained by processing the sample. The processing flow path 150 is subjected to pretreatment of the target component 10 by being heated. A positive pressure is applied from the gas supply unit 202 to the sample supply tank 151 after the processing in the processing flow path 150, whereby the processing liquid 11 is sent to the quantification unit 143 via the first flow path 141.

The quantification unit 143 quantifies the processing liquid 11 sent to the reservoir 110. The quantification unit 143 includes an inner cavity having a predetermined capacity formed on the substrate 140. For example, the quantification unit 143 quantifies about 1 µL to 100 µL of the processing liquid 11. For example, the quantification unit 143 quantifies about 10 µL of the processing liquid 11. A positive pressure is applied from the gas supply unit 202 to the gas supply unit 111, and a negative pressure is applied from the gas supply unit 202 to the reservoir 110, so that the processing liquid 11 is sent to the reservoir 110 via the flow path 145.

In the reservoir 110, the treatment liquid 11 is diluted with the diluent 12. The diluent 12 may be placed in the reservoir 110 in advance. A diluent 12 in an amount corresponding to a predetermined dilution ratio is placed in the reservoir 110. For example, several tens µL to several hundred µL of the diluent 12 are placed in the reservoir 110. For example, 190 µL of diluent 12 is placed in reservoir 110. For example, the dilution ratio of the treatment liquid 11 in the reservoir 110 is 10 times or more and 100,000 times or less.

The reservoir 110 agitates the treatment liquid 11 and the diluent 12 in the reservoir 110 by introducing gas. The gas is supplied via the gas supply unit 111. In this way a droplet forming sample 13 for forming a droplet 14 containing the diluted target component 10 is prepared in the reservoir 110. For example, the reservoir 110 is a tubular reservoir connected to the substrate 140 of the sample processing chip 100. Gas is introduced from the bottom of the reservoir 110 and the gas rises in the reservoir to agitate the treatment liquid 11 and the diluent 12. The droplet forming sample 13 is sent to the droplet forming sample supply unit 142a via the flow path 142 when the positive pressure is applied from the gas supply unit 202 to the reservoir 110 after adjustment of the reservoir 110. The flow path 142 is used as a third connection flow path for transferring the droplet forming sample 13 from the reservoir 110 to the droplet forming flow path 180.

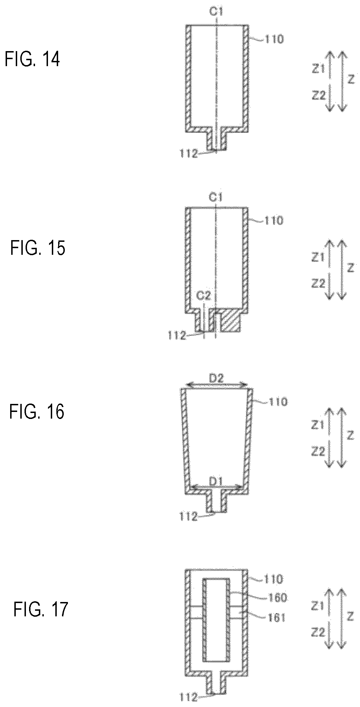

In the example shown in FIG. 14, the reservoir 110 is formed in a cylindrical shape. The inlet 112 of the reservoir 110 is arranged so that the central axis substantially coincides with the central axis C1 of the storage tank. The storage tank of the reservoir 110 also is formed so that its inner side surface is hydrophilic. For example, the storage tank of the reservoir 110 is made of polycarbonate. The other part of the sample processing chip 100 is made of polypropylene, for example. A hydrophilic film also may be attached to the inner surface of the storage tank of the reservoir 110 so as to have hydrophilic properties, or a hydrophilic polymer may be applied. For example, the storage tank is hydrophilic such that the contact angle of the liquid is 90 degrees or less. In this way it is possible to suppress the bubbles from becoming larger in a state in which the bubbles have reached the inner side surface, so that it is possible to suppress the bubbles from contacting the entire inner periphery of the storage tank. As a result, it is possible to prevent the liquid in the storage tank from rising together with the bubbles from the liquid surface, so that it is possible to suppress the liquid from flowing out of the storage tank. As a result, contamination can be effectively suppressed.

In the example shown in FIG. 15, the inlet 112 of the reservoir 110 is disposed at a position where the center axis C2 is displaced from the central axis C1 of the storage tank. In this way it is possible to suppress the bubbles from contacting the entire circumference of the inner surface of the storage tank since the bubbles can be supplied from a position deviated from the central axis of the storage tank. In this way it is possible to suppress the liquid in the storage tank from rising above the liquid level together with the bubbles.

In the example shown in FIG. 16, the storage tank of the reservoir 110 is formed such that the cross-sectional area in the horizontal direction increases as it goes to the top of the tank. Specifically, the inner diameter of the bottom portion of the storage tank is D1, and the inner diameter at the upper end of the storage tank is D2 which is greater than D1. In this way it is difficult for the bubbles to come into contact with the inner side surface of the storage tank as the bubbles are raised, so that it is possible to suppress the liquid in the storage tank from rising together with the bubbles from the liquid surface. When the reservoir 110 is formed by resin molding, it also is easy to remove the mold.

In the example shown in FIG. 17, the storage tank of the reservoir 110 has an inner cylinder 160 for allowing the introduced gas to ascend through the inside. In this way a pathway for bubbles is formed, so that it is possible to prevent the liquid in the storage tank from rising above the liquid surface together with the bubbles. The reservoir 110 also has a support part 161 for supporting the inner cylinder 160. The support part 161 connects the inner cylinder 160 and the side surface of the reservoir 110.

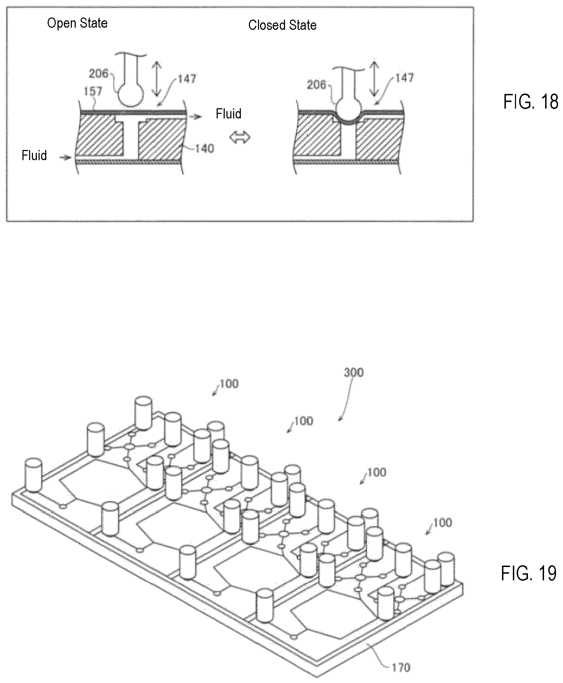

The on/off valves 147a, 147b, 147c, 147d, 147i, 156a, 156b, 156c and 156d are opened and closed similar to the on/off valve 147 shown in FIG. 18. In the example of FIG. 18, the on/off valve 147 is switched between an open state and a closed state by deformation of the elastic member 157 on the board 140. The elastic member 157 is, for example, a resin film adhered on the substrate 140. In the open state, the pressing part 206 of the sample processing apparatus 200 is separated from the elastic member 157. In this way the flow path in the substrate 140 is opened. On the other hand, in the closed state, the pressing part 206 presses the elastic member 157 from above. In this way the flow path in the substrate 140 is closed. That is, the pressing part 206 opens and closes the on/off valve 147 depending on the presence or absence of pressing.

In the example shown in FIG. 19, a plurality of sample processing chips 100 can be held by a chip holder 170. In the example of FIG. 19, four sample processing chips 100 are held by a chip holder 170 and supplied as a cartridge 300 to a sample processing apparatus 200. Note that the chip holder 170 may hold sample processing chips 100 other than the four.

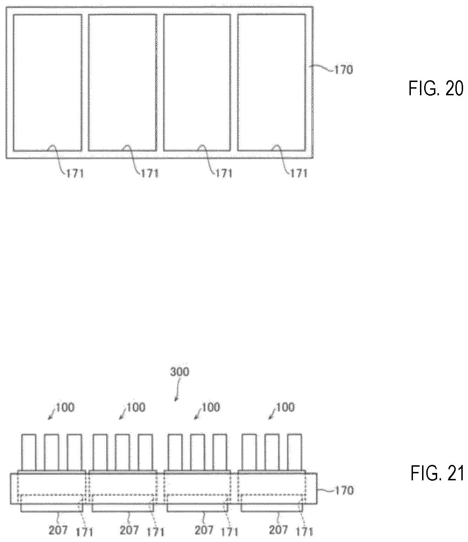

As in the example shown in FIG. 20, the chip holder 170 may be formed in a frame shape having holes 171 penetrating in the vertical direction. The chip holder 170 also holds the sample processing chip 100 with a frame. In this way it is possible to access the sample processing chip 100 from both the upper side and the lower side.

As in the example shown in FIG. 21, the heating unit 207 may be brought into contact with the sample processing chip 100 held in the chip holder 170 from below via a hole 171. The heating unit 207 adjusts the temperature of the sample processing chip 100. For example, in order to amplify DNA by PCR in the sample processing chip 100, the heating unit 207 heats the sample processing chip 100. For example, the heating unit 207 adjusts the temperature of the processing flow path 150 for pretreatment in the sample processing chip 100. The heating unit 207 includes, for example, a heater. For example, the heating unit 207 also may include a Peltier element.

### Processing Flow of Sample Processing Chip

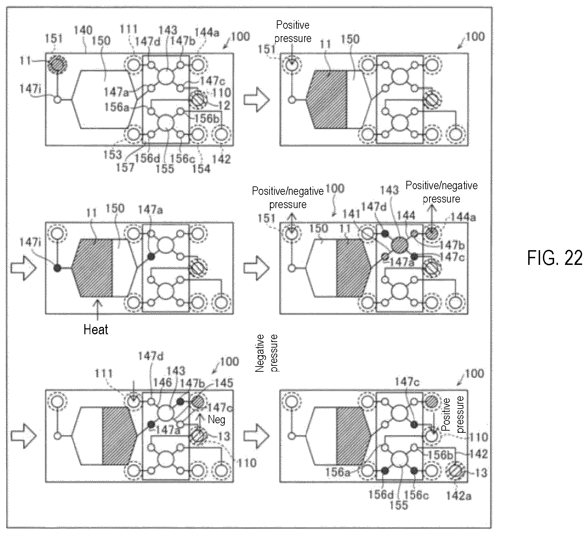

The processing flow of the sample processing chip 100 of the example of FIG. 12 will be described with reference to FIG. 22.

In FIG. 22A, a sample containing the target component 10 is supplied to the sample supply tank 151. The diluent 12 also is supplied to the reservoir 110. In FIG. 22B, with the on/off valves 147a, 147b and 147i are open, and positive pressure is applied to the sample supply tank 151. In this way the sample is delivered from the sample supply tank 151 to the processing flow path 150.

In FIG. 22C, the on/off valves 147a and 147i are in the closed state, and the processing flow path 150 is heated by the heating unit 207. In this way the target component 10 is pretreated in the processing flow channel 150. In FIG. 22D, the on/off valves 147a and 147b are open, and the first flow path 141 and the second flow path 144 are open. The on/off valves 147c and 147d are closed, and the third flow oath 145 and the fourth flow path 146 are closed. In this state, positive pressure and negative pressure are applied to the sample supply tank 151. A negative pressure is applied to the waste port 144a during the positive pressure timing of the sample supply tank 151. A positive pressure is applied to the disposal port 144a during the negative pressure timing of the sample supply tank 151. In this way the processing liquid 11 is reciprocated between the first flow path 141, the second flow path 144, and the inner cavity of the quantification unit 143. Then, the processing liquid 11 fills the inner cavity of the quantification unit 143 and quantified.

In FIG. 22E, the on/off valves 147a and 147b are closed, and the first flow path 141 and the second flow path 144 are closed. The on/off valves 147c and 147d are also opened, and the third flow path 145 and the fourth flow path 146 are opened. In this state, a positive pressure is applied to the gas supply unit 111. A negative pressure also is applied to the reservoir 110. In this way the processing liquid 11 that fills the inner cavity of the quantification unit 143 is moved to the reservoir 110 by the gas from the gas supply unit 202.

Then, a positive pressure is applied to the gas supply unit 111. In this way gas is introduced into the reservoir 110. The introduction time of the gas is, for example, about 0.1 second to 60 seconds together with the liquid transfer. Preferably, the introduction time of the gas is 0.4 seconds or more and 50 seconds or less together with the liquid transfer. More preferably, the introduction time of the gas is not less than 0.4 seconds and not more than 10 seconds together with the liquid transfer. In this way it is possible to agitate the interior of the reservoir 110 reliably in a short time. For example, the introduction time of the gas is about 0.4 seconds. In this way the processing liquid 11 and the diluent 12 are agitated in the reservoir 110, and the droplet forming sample 13 is adjusted.

In FIG. 22F, the on/off valves 156a and 156b are opened to bring the flow path 142 into an open state. The on/off valves 147c, 156c and 156d also are closed. In this state, a positive pressure is applied to the reservoir 110. In this way the droplet forming sample 13 of the reservoir 110 is transferred to the droplet forming sample supply unit 142a.

### Post Processing

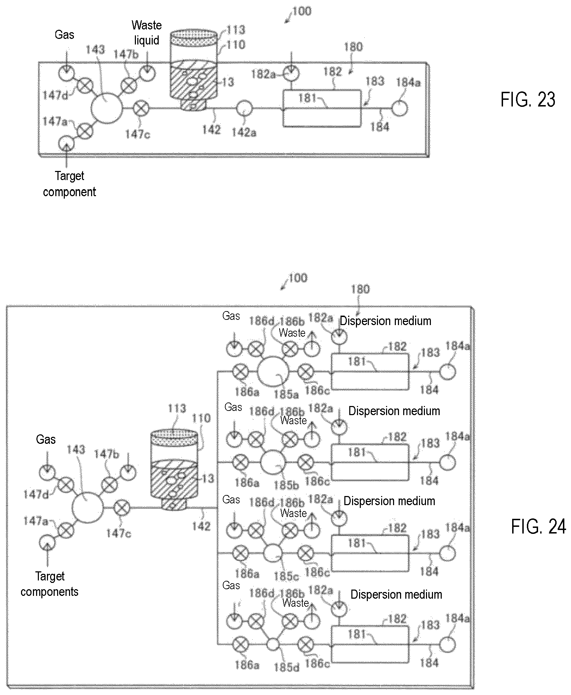

As in the example shown in FIG. 23, the sample processing chip 100 also may have a flow path used for post-processing after adjustment of the droplet forming sample 13 by the reservoir 110.

In the sample processing chip 100 of the example of FIG. 23, a droplet forming flow path 180 for post-processing is provided. The droplet forming flow path 180 forms the droplet forming sample 13 as a droplet 14 in the dispersion medium 15. In this way it is possible to convert the diluted processing liquid 11 into droplets 14 in the dispersion medium 15.

The droplet forming flow path 180 includes a first channel 181 through which the droplet forming sample 13 flows, a second channel 182 through which flows the dispersion medium 15 that is immiscible with the droplet forming sample 13, and an intersection part 183 where the first channel 181 and the second channel 182 intersect each other. In this way the droplet forming flow path 180 makes it possible to easily convert the droplet forming sample 13 into the droplet 14 in the dispersion medium 15.

A predetermined amount of the droplet forming sample 13 also is supplied to the droplet forming flow path 180. The dispersion medium 15 also is supplied in accordance with the flow rate of the droplet forming sample 13. In this way the number of droplets 14 and the average particle diameter are controlled.

The sample processing chip 100 is provided with a dispersion medium supply unit 182a to which the dispersion medium 15 is supplied, a flow path 184, and an emulsion supply unit 184a for supplying the emulsion of formed droplets 14 for additional post-processing.

In the example of FIG. 23, the reservoir 110 and the droplet forming flow path 180 are integrally provided in the sample processing chip 100.

When the sample includes a plurality of types of target components 10, the sample processing chip 100 may have a plurality of droplet forming flow paths 180 as shown in FIG. 24.

In the example shown in FIG. 24, the droplet forming sample 13 according to the amount of the target component 10 is supplied to the droplet forming flow path 180 provided for each type of the target component 10. In other words, the sample processing chip 100 is provided with droplet formation quantification units 185a, 185b, 185c, 185d for quantifying the droplet forming sample 13. Droplet quantification units 185a, 185b, 185c, and 185d are quantitatively set according to the amount of target component 10. In this way it is possible to concurrently form droplets 14 of plural kinds of target components 10 using the sample processing chip 100. The droplet forming quantification units 185a, 185b, 185c, 185d are configured, for example, by an inner cavity formed in the sample processing chip. The inner cavities of the droplet formation quantification units 185a, 185b, 185c, 185d have a predetermined capacity.

For example, the amount of the droplet forming sample 13 to be supplied for each type of the target component 10 is calculated according to the abundance of the plural kinds of target components 10 in the droplet forming sample 13. Then, the amount to be quantified by each of the droplet forming quantitative units 185a, 185b, 185c, 185d is set so as to supply the calculated amount of the droplet forming sample 13.

The droplet forming quantification unit 185 (185b, 185c, 185d) feeds the droplet forming sample 13 by controlling the opening and closing of the on/off valves 186a, 186b, 186c, 186d. Specifically, the on/off valves 186a and 186b are opened, and the on/off valves 186c and 186d are closed. In this state, the droplet forming sample 13 is fed from the reservoir 110 and fills the inner cavity of the droplet forming quantification unit 185a (185b, 185c, 185d). Thereafter, the on/off valves 186a and 186b are closed, and the on/off valves 186c and 186d are opened. In this state, the droplet forming sample 13 that loaded in the inner cavity of the droplet forming quantification unit 185a (185b, 185c, 185d) is transferred by the gas from the gas supply unit 202. In this way a predetermined amount of the droplet forming sample 13 is sent to the droplet forming flow path 180.

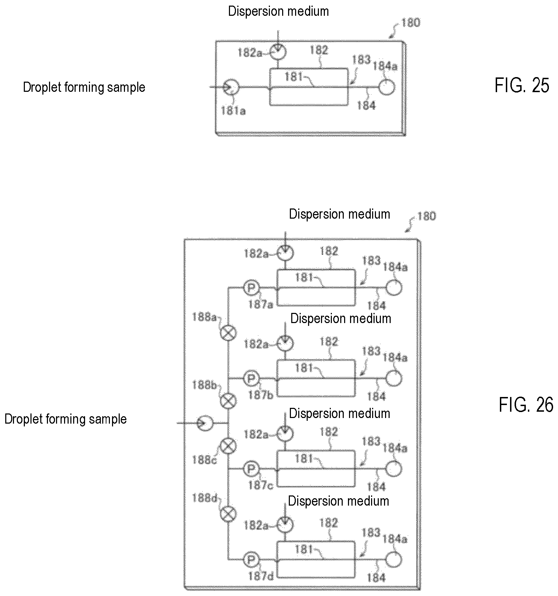

In the example of FIG. 25, the droplet forming flow path 180 is provided separately from the reservoir 110. In the example of FIG. 25, the droplet forming flow path 180 has a droplet forming sample entrance 181a. The droplet forming sample 13 is supplied from the droplet forming sample supply unit 142a of the sample processing chip 100 to the droplet forming sample entrance 181a.

In the example of FIG. 26, the droplet forming flow path 180 is provided separately from the reservoir 110. In the example of FIG. 26, the droplet forming sample 13 corresponding to the amount of the target component 10 is supplied to the droplet forming flow path 180 provided for each type of the target component 10. The droplet forming flow path 180 is provided with pumps 187a, 187b, 187c and 187d and on/off valves 188a, 188b, 188c, and 188d for each type of the target component 10.

In the example of FIG. 26, the flow rates of the droplet forming sample 13 supplied to the respective flow paths are adjusted by the flow rate of the pumps 187a, 187b, 187c, and 187d and opening and closing of the on/off valves 188a, 188b, 188c, and 188d.

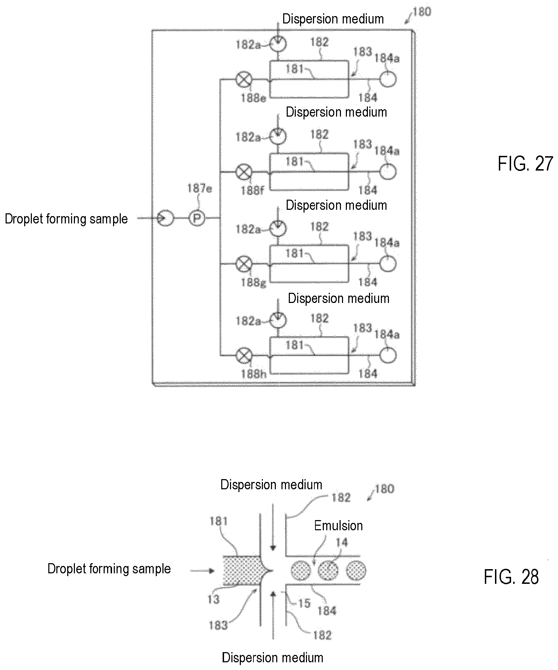

In the example of FIG. 27, the droplet forming flow path 180 is provided separately from the reservoir 110. In the example of FIG. 27, the droplet forming sample 13 corresponding to the amount of the target component 10 also is supplied to the droplet forming flow path 180 provided for each type of the target component 10. The droplet forming flow path 180 is provided with a pump 187e and on/off valves 188e, 188f, 188g, and 188h for each type of the target component 10.

In the example of FIG. 27, the flow rate of the droplet forming sample 13 supplied to each flow path is adjusted by the flow rate of the pump 187e and the opening and closing of the on/off valves 188e, 188f, 188g, and 188h.

FIG. 28 shows an example in which the droplet 14 is formed at the intersection part183. The droplet forming sample 13 flows from the first channel 181 into the intersection part 183 and the dispersion medium 15 flows from the pair of second channels 182 to the intersection part 183. The droplet forming sample 13 containing the target component 10 flows into the intersection part 183 into which the dispersion medium 15 flows from the vertical direction in FIG. 28. The droplet forming sample 13 is divided into droplets by the shearing force generated by being sandwiched by the dispersion medium 15 at the intersection part 183. The divided liquid droplet 14 is encapsulated in the dispersion medium 15 flowing into the intersection part 183, whereby an emulsion is formed. The emulsified sample stream is transferred to the adjacent fluid module 130 via the flow path 184.

### Structural Examples of Sample Processing Apparatus

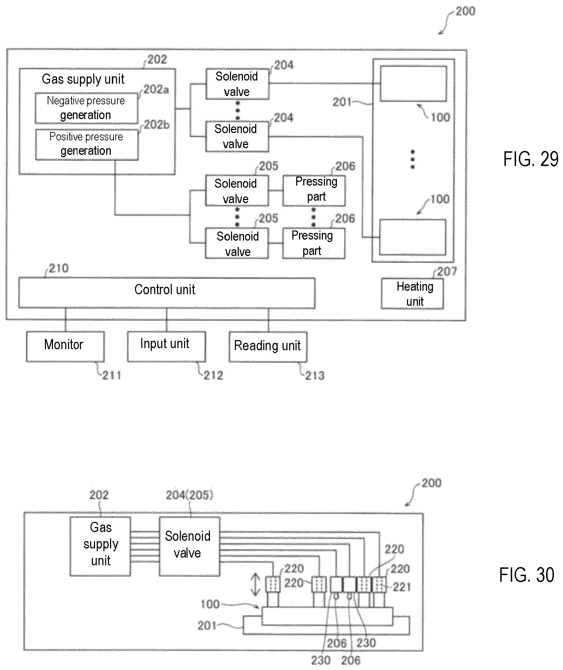

FIG. 29 shows an outline of the sample processing apparatus 200.

The sample processing apparatus 200 is a sample processing apparatus for processing the target component 10 in the sample using the sample processing chip 100. The contents of sample processing are determined by the sample processing chip 100 to be used. The sample processing apparatus 200 can perform different types of sample processing depending on the type of the sample processing chip 100 to be used.

The sample processing apparatus 200 includes an installation unit 201, a gas supply unit 202, a solenoid valve 204, a solenoid valve 205, a pressing part 206, and a heating unit 207. The sample processing apparatus 200 also includes a control unit 210.

The control unit 210 controls each unit so that the sample processing chip 100 performs the processing of the sample. The control unit 210 includes a CPU and a memory.

When a processing unit used for various processing steps is installed in the sample processing apparatus 200, the control unit 210 may control these processing units. Units used for various processing steps include, for example, a heating unit or a cooling unit for controlling the temperature of the liquid, a magnet unit for exerting a magnetic force on the liquid, a camera unit for imaging the liquid, a detection unit for detecting a sample or a label in the liquid and the like. These processing units are provided corresponding to at least one of the plurality of fluid modules 130 and are configured to operate when executing the processing steps by the corresponding fluid modules 130.

The sample processing apparatus 200 can include a monitor 211, an input unit 212, a reading unit 213, and the like. On the monitor 211, the control unit 210 displays a predetermined display screen according to the operation of the sample processing apparatus 200. The sample processing apparatus 200 also may be connected to an external computer (not shown) and displayed on the monitor of the computer. The input unit 212 is composed of, for example, a keyboard, a mouse, and the like, and has a function of receiving information input. The reading unit 213 includes a code reader such as a bar code and a two-dimensional code, a tag reader such as an RFID tag, and has a function of reading information given to the sample processing chip 100. The reading unit 213 can also read information such as a sample container (not shown) for containing the sample.

The gas supply unit 202 can supply positive pressure and negative pressure to each section of the sample processing apparatus 200. The gas supply unit 202 includes a negative pressure generation unit 202a and a positive pressure generation unit 202b. The negative pressure generating unit 202a includes a negative pressure pump, for example. The positive pressure generating unit 202b includes, for example, a compressor. The gas supply unit 202 supplies positive pressure or negative pressure to the sample processing chip 100 via the solenoid valve 204. The liquid is sent in the sample processing chip 100 by the positive pressure and the negative pressure supplied by the gas supply unit 202. The positive pressure generating unit 202b of the gas supply unit 202 supplies positive pressure to the pressing part 206 via the solenoid valve 205. When a positive pressure is supplied, the pressing part 206 is exerted downward to press the on/off valve 147 of the sample processing chip 100 to bring it into a closed state. When the supply of the positive pressure is stopped, the pressing part 206 is exerted upward by an elastic member such as a spring, releases the pressure of the on/off valve 147 of the sample processing chip 100, and enters the open state. The gas supply unit 202 functions as a liquid supply unit that supplies a liquid and a gas supply unit that supplies a gas.

A plurality of solenoid valves 204 are provided. The solenoid valve 204 is individually controlled by the control unit 210, and the open/close state is switched. A plurality of solenoid valves 205 are provided. The solenoid valve 205 is individually controlled by the control unit 210, and the open/close state is switched. The heating unit 207 heats the sample processing chip 100.

### Structural Example of Installation Unit

Connectors 220 and 230 corresponding to the installation part 201 may be provided in the installation part 201. FIG. 30 shows a structural example of the installation unit 201. The connector 220 is provided with a plurality of holes 221 for supplying positive pressure and negative pressure by the gas supply unit 202 to the sample processing chip 100. The connector 230 is provided with a plurality of pressing parts 206 for controlling the on/off valve 147 of the sample processing chip 100. When the sample processing chip 100 is installed in the installation unit 201, the connectors 220 and 230 are lowered downward and connected to the sample processing chip 100.

### Structural Example of Connector

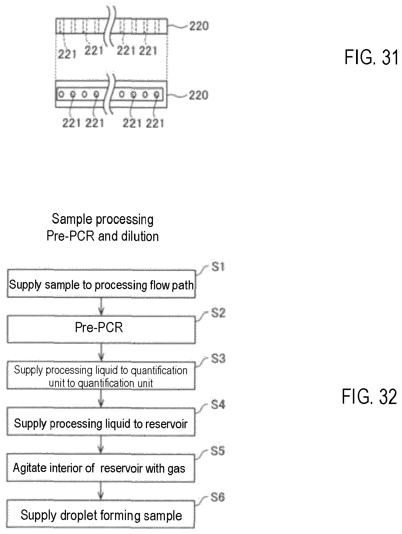

FIG. 31 shows a structural example of a connector 220. The connector 220 has a hole 221 for accessing the substrate flow path 121 of the substrate 120. The connector 220 is installed at a position corresponding to the substrate flow path 121 of the substrate 120. The connector 220 also may be provided only at a position corresponding to an arbitrary board flow path 121. The connector 220 may be configured as a manifold in which a plurality of liquid feed tubes are formed. In this case, each liquid feed tube and a plurality of ports of the sample processing chip 100 are collectively connected via the connector 220 by lowering the connector 220. When the sample processing chip 100 shown in FIG. 12 is installed, the connector 220 is connected to a reservoir 110, a gas supply unit 111, a droplet forming sample supply unit 142a, a disposal port 144a, a sample supply tank 151, and connection parts 153 and 154.

### Sample Processing Flow by Sample Processing Apparatus

A processing flow of installing the sample processing chip 100 of the example of FIG. 12 in the sample processing apparatus of FIG. 29 and performing sample processing will be described with reference to FIG. 32. The sample processing is controlled by the control unit 210 of the sample processing apparatus 200.

The sample processing is started in a state where the sample processing chip 100 is installed in the installation unit 201 of the sample processing apparatus 200. Note that in this case the sample containing the target component 10 is supplied to the sample supply tank 151, and the diluent 12 is supplied to the reservoir 110.

In step S1, the sample containing the target component 10 is sent to the processing flow path 150 (see FIG. 22B). Specifically, in a state in which the on/off valves 147a, 147b, and 147i are in the open state, a positive pressure is applied to the sample supply tank 151. In this way the sample is delivered from the sample supply tank 151 to the processing flow path 150.

In step S2, pre-PCR is performed (see FIG. 22C). Specifically, in a state in which the on/off valves 147a and 147i are closed, the process flow path 150 is heated by the heating unit 207. In this way, in the processing flow path 150, pre-PCR processing of the target component 10 is performed.

In step S3, the pre-PCR processed processing liquid 11 is sent to the quantification unit 143 (see FIG. 22D). Specifically, the on/off valves 147a and 147b are opened, and the on/off valves 147c and 147d are closed. In this state, positive pressure and negative pressure are applied to the sample supply tank 151. A negative pressure is applied to the waste port 144a during the positive pressure timing of the sample supply tank 151. A positive pressure is applied to the disposal port 144a during the negative pressure timing of the sample supply tank 151. In this way the processing liquid 11 is reciprocated between the first flow path 141, the second flow path 144, and the inner cavity of the quantification unit 143. Then, the processing liquid 11 fills the inner cavity of the quantification unit 143 and quantified.

In step S4, the quantitatively processed processing liquid 11 is sent to the reservoir 110 (FIG. 22E). Specifically, the on/off valves 147a and 147b are closed, and the on/off valves 147c and 147d are opened. In this state, a positive pressure is applied to the gas supply unit 111. A negative pressure also is applied to the reservoir 110. In this way the processing liquid 11 that fills the inner cavity of the quantification unit 143 is moved to the reservoir 110 by the gas from the gas supply unit 202.

In step S5, the interior of the reservoir 110 is agitated by gas (bubbles). Specifically, after sending the processing liquid 11 to the reservoir 110, a positive pressure is continuously applied to the gas supply unit 111. In this way gas is introduced into the reservoir 110. The introduction time of the gas is, for example, about 0.4 second in conjunction with the liquid transfer. In this way the processing liquid 11 and the diluent 12 are agitated in the reservoir 110, and the droplet forming sample 13 is adjusted.

In step S6, the droplet forming sample 13 is fed (see FIG. 22F). Specifically, the on/off valves 156a and 156b are opened, and the on/off valves 147c, 156c and 156d are closed. In this state, a positive pressure is applied to the reservoir 110. In this way the droplet forming sample 13 of the reservoir 110 is transferred to the droplet forming sample supply unit 142a.

### Example of Assay Using Sample Processing Chip

Next, an example of a specific assay using the sample processing chip 100 will be described.

### Description of Emulsion PCR Assay

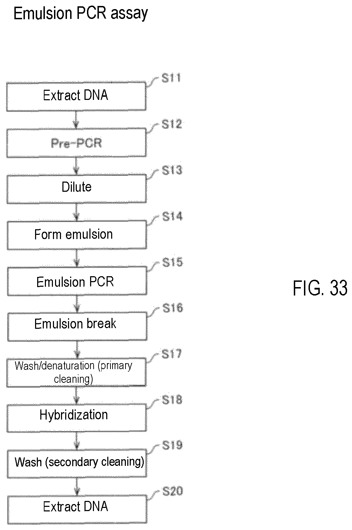

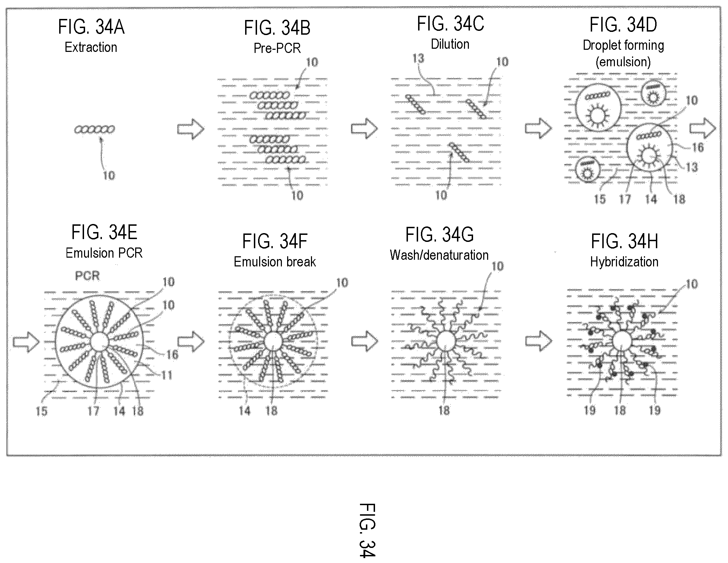

FIG. 33 shows an example of a flow of an emulsion PCR assay. FIG. 34 is a diagram illustrating the progress of the process in the emulsion PCR assay. Here, it is assumed that the target component 10 is nucleic acid DNA and the carrier 18 is magnetic particles.

In step S11, DNA is extracted from a sample such as blood by pretreatment (see FIG. 34A). The pretreatment may be performed using a dedicated nucleic acid extraction device or a pretreatment mechanism may be provided in the sample processing device 200.

In step S12, the extracted DNA is amplified by pre-PCR processing (see FIG. 34B). The pre-PCR treatment is a process of amplifying the DNA contained in the extract solution after the pretreatment in advance of the subsequent emulsion making process. In the pre-PCR treatment, the extracted DNA is mixed with a reagent for PCR amplification including a polymerase and a primer, and DNA in the mixed solution is amplified by temperature control by a thermal cycler. The thermal cycler performs a process of repeating one cycle in which a plurality of different temperatures are applied to the mixed solution a number of times. In order to stabilize the number of DNA after amplification, it is preferable to amplify to a sufficient number more than that required for emulsion preparation processing. Therefore, the DNA amplified by the pre-PCR treatment is diluted to a predetermined resolution by a dilution process.

In step S13, the DNA is diluted with the diluent 12 (see FIG. 34C). The dilution processing in step S13 is executed between the processing in FIG. 34B and the emulsification processing in FIG. 34D. The DNA is diluted at a dilution ratio of, for example, about 1000 times to several hundred thousand times. The DNA amplified by the pre-PCR process is diluted by the dilution process until it reaches a predetermined concentration (the number of DNA per unit volume of the mixed solution) required for emulsion preparation processing.

In step S14, an emulsion containing magnetic particles and the reagent 16 for amplification reaction and DNA is formed (see FIG. 34D). That is, a droplet 14 containing a mixture of reagent 16 containing DNA and reagent 16 containing polymerase and magnetic particles is formed, and a large number of droplets 14 are dispersed in the dispersion medium 15. The magnetic particles confined in the droplet 14 are provided with primers 17 for nucleic acid amplification on its surface. The droplet 14 is formed so that each one of the droplet 14 contains magnetic particles and target DNA molecules. The dispersion medium 15 is immiscible with the mixed solution. In this example, the mixture is aqueous and the dispersing medium 15 is oil based. The dispersion medium 15 is, for example, an oil.

In step S15, under the temperature control by the thermal cycler, the DNA binds to the primer 17 on the magnetic particle within each droplet 14 of the emulsion, and is amplified (emulsion PCR) (see FIG. 34E). In this way the target DNA molecules are amplified in the individual droplets 14.

After amplifying the DNA on the magnetic particles, in step S16 the emulsion is destroyed and the magnetic particles containing the amplified DNA are taken out from the droplet 14 (emulsion break) (see FIG. 34F). As a reagent for destroying the droplet 14, one or more kinds of reagents including alcohol, a surfactant and the like are used.

In step S17, the magnetic particles removed from the droplet 14 are washed in a BF separation step (primary cleaning). The BF separation step is a process step of removing unnecessary substances adhered to magnetic particles by allowing magnetic particles containing amplified DNA to pass through a washing liquid in a state of being magnetized by magnetic force. In the primary cleaning step, for example, a cleaning liquid containing alcohol is used. Alcohol removes the oil film on the magnetic particles and modifies the amplified double-stranded DNA into a single strand (see FIG. 34G).

After washing, in step S18 the DNA denatured to single strands on the magnetic particles is bound to a labeling substance 19 for detection (hybridization) (see FIG. 34H). The labeling substance 19 is, for example, a substance that emits fluorescence. The labeling substance 19 is designed to specifically bind to the DNA to be detected.

In step S19, the magnetic particles bonded to the labeling substance 19 are washed in a BF separation step (secondary washing). The secondary BF separation step is performed by the same process as the primary BF separation step. In the secondary washing step, for example, PBS (phosphate buffered saline) is used as a washing solution. PBS removes unreacted labeling substance (including labeling substance nonspecifically affixed to magnetic particles) not bound to DNA.

In step S20, DNA is detected via a hybridized labeling substance 19. DNA is detected, for example, by a flow cytometer. In the flow cytometer, magnetic particles containing DNA bound to the labeling substance 19 flow through a flow cell, and the magnetic particles are irradiated with laser light. The fluorescence of the labeling substance 19 emitted due to the irradiating laser light is detected.

The DNA may be detected by image processing. For example, magnetic particles containing DNA bound to the labeling substance 19 are dispersed on a flat slide or on a flow path, and the dispersed magnetic particles are imaged by a camera unit. The number of magnetic particles emitting fluorescence is counted based on the captured image.

### Description of Examples

Next, examples conducted to confirm the effect of the sample processing method of the present embodiment will be described. In this example, an experiment was conducted in which the processing liquid 11 containing the target component 10 and the diluent 12 were agitated by the reservoir 110. Experiments also were conducted using DNA as target component 10.

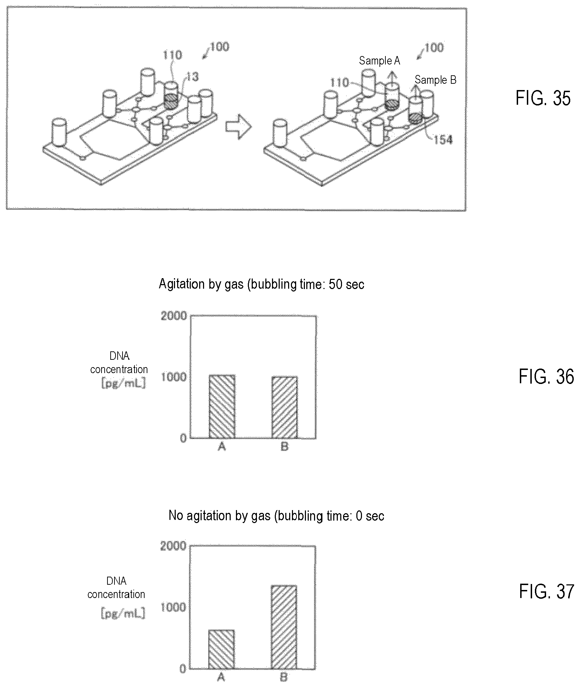

FIG. 35 shows the structure used in the examples. In the example, the processing liquid 11 and the diluent 12 are supplied to the reservoir 110, the gas is introduced into the reservoir 110 for a predetermined time (50 seconds), and the inside of the reservoir 110 is agitated thereby. Specifically, the diluent 12 was first introduced into the reservoir 110, and thereafter the processing liquid 11 was introduced from below the reservoir 110. Then, gas was introduced for a predetermined time from the bottom of the reservoir 110. Thereafter, a part of the mixed liquid in the reservoir 110 was transferred to the connecting part 154. At this time, the mixed solution was discharged from the bottom of the reservoir 110 and transferred. That is, the lower portion of the mixed liquid in the reservoir 110 was transferred to the connecting part 154. Then, the upper part of the mixture remains in the reservoir 110. The mixture remaining in the reservoir 110 was removed as sample A and the concentration of DNA was measured. The mixed solution of the connecting part 154 also was removed as sample B, and the concentration of DNA was measured.

In the example, as shown in FIG. 36, the DNA concentrations of samples A and B were both about 1000 pg/mL. That is, the DNA concentrations of Sample A and Sample B were substantially equal. In this way it was confirmed that agitating was performed satisfactorily in the reservoir 110 by introducing the gas.

In a comparative example shown in FIG. 37, agitation processing for introducing gas is not performed in the reservoir 110. Specifically, the diluent 12 was first introduced into the reservoir 110, and thereafter the processing liquid 11 was introduced from below the reservoir 110. Then, a part of the mixed liquid in the reservoir 110 was transferred to the connecting part 154.

In the comparative example, the DNA concentration of Sample A was about 600 pg/mL. The DNA concentration of Sample B was about 1400 pg/mL. That is, the concentration of DNA in the lower mixture was greater. That is, it was confirmed that, in the comparative example in which the agitation process by introducing the gas was not performed, and agitation of the processing liquid 11 and the diluent 12 was not carried out satisfactorily.

Next, a case where agitation is carried out by heat convection (Comparative Example) and a case where agitation is performed by bubbles (Example) will be described. In the example, the processing liquid 11 and the diluent 12 are supplied to the reservoir 110, the gas is introduced into the reservoir 110, and the inside of the reservoir 110 is agitated by bubbles. In the example, the processing liquid 11 also was diluted by 10 times or 50 times with the diluent 12. In the comparative example, the processing liquid 11 and the diluent 12 were supplied to the reservoir, the reservoir was heated, and the inside of the reservoir was agitated by heat convection. In the comparative example, the processing liquid 11 was diluted by 30 times or 50 times with the diluent 12.

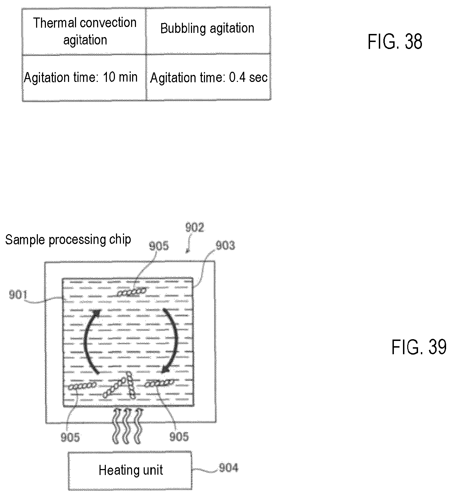

As shown in FIG. 38, agitation was completed in 0.4 seconds in the example. In the comparative example, it took 10 minutes to complete the agitation. In this way it was confirmed that agitation was carried out in the reservoir 110 in a short time by introducing the gas.

Note that the embodiments disclosed this time are examples in all respects and are not restrictive. The scope of the present invention is indicated not by the description of the above embodiments but by the scope of the claims, and includes meanings equivalent to the claims and all changes (modifications) within the scope thereof.

## Claims

1. A method of processing a sample and of preparing a droplet forming sample of forming droplets individually encapsulating a target component, the method comprising:
storing a processing liquid (11) containing a target component (10) and a diluent (12) for diluting the processing liquid (11) in a reservoir (110) of a sample processing chip (100), wherein the processing liquid (11) is diluted in order to prepare a droplet forming sample (13) for forming droplets individually encapsulating the target component (10);
**characterized by** the method further comprising:
agitating the processing liquid (11) and the diluent (12) in the reservoir (110) by introducing a gas into the processing liquid (11) and the diluent (12) in the reservoir (110), wherein
in the agitating, the gas is introduced into the reservoir (110) for a predetermined time of 0.1 seconds or more and 60 seconds or less to agitate the processing liquid (11) and the diluent (12),
wherein
the reservoir (110) is a storage tank which is tube-shaped and connected to a substrate of the sample processing chip (100); and
in the agitating, the processing liquid (11) and the diluent (12) are agitated by introducing the gas from a bottom of the storage tank and rising the gas in the storage tank.

2. The sample processing method according to claim 1, wherein
in the agitating, the processing liquid (11) and the diluent (12) are agitated by introducing the gas into the reservoir at a pressure of 100 mbar or more and 1000 mbar or less.

3. The sample processing method according to claim 1 or 2, wherein
in the storing, sending the processing liquid (11) to the reservoir (110) with the gas, after storing the diluent in the reservoir (110).

4. The sample processing method according to claims 1 or 2, wherein
the sample processing chip (100) has an inlet (112) for introducing the gas; and
the method further comprises:
introducing the gas from the inlet (112) to deliver the processing liquid (11) to the reservoir (110), after storing the diluent (12) in the reservoir (110); and
introducing the gas from a bottom portion of the reservoir (110) following the supply of the processing liquid (11) by the gas introduced from the inlet (112).

5. The sample processing method according to claims 1 or 2, wherein
the sample processing chip (100) has an inlet (112) for introducing the gas; and
the method further comprises:
introducing the gas from the inlet (112) in order to send the diluent to the reservoir (110) from the inlet (112), after storing the processing liquid (11) in the reservoir (110); and
introducing the gas from a bottom portion of the reservoir (110) following the sending of the diluent (12) by the gas introduced from the inlet (112).

6. The sample processing method according to any one of claims 1 to 5, wherein
the sample processing chip (100) has a quantification unit (143); and
the method further comprises:
sending the processing liquid (11) quantified using the quantification unit (143) to the reservoir.

7. The sample processing method according to claim 6, wherein
the quantification unit (143) comprises an inner cavity having a predetermined content amount formed in the sample processing chip.

8. The sample processing method according to claim 7, wherein
the sample processing chip comprises a first flow path (141) and a second flow path (144) connected to the inner cavity of the quantification unit (143), wherein each of the first flow path (141) and the second flow path (144) has an on-off valve (147a, 147b);
the first flow path (141) is connected to an inlet (141a) for the processing liquid (11);
the second flow path (144) is connected to a disposal port (144a); and
the method further comprises:
quantifying the processing liquid (11) by bring the first flow path (141) and the second flow path (144) into an open state, delivering the processing liquid (11) from the first flow path (141) and filling the processing liquid (11) in the inner cavity of the quantification unit (143).

9. The sample processing method according to claim 8, wherein
the sample processing chip further comprises a third flow path (145) and a fourth flow path (146) connected to the inner cavity of the quantification unit (143), wherein each of the third flow path (145) and the fourth flow path (146) has an on-off valve;
the third flow path (145) is connected to the reservoir;
the fourth flow path (146) is connected to a gas supply (202) unit for feeding the gas; and
the method further comprises:
filling the processing liquid (11) in the inner cavity of the quantification unit (143) by bring the first (141) flow path and the second flow path (144) into an open state and the third flow path (145) and the fourth flow path (146) into closed state and delivering the processing liquid (11) to the reservoir from the first flow path (141); and
delivering the processing liquid (11) filled in the inner cavity of the quantification unit (143) with the gas from the gas supply unit (202) by bring the first flow path (141) and the second flow path (144) into the closed state and the third flow path (145) and the fourth flow path (146) into the open state.

10. The sample processing method according to claim 8 or 9, wherein
in the quantifying, the processing liquid (11) is reciprocatingly moved between the first flow path (141), the second flow path (144), and the inner cavity.

11. The sample processing method according to any one of claims 6 to 10, wherein
the sample processing chip comprises a plurality of quantification units (143a, 143b) and reservoirs (110a, 110b) connected in series along the flow of the processing liquid (11); and
the method further comprises:
further diluting mixed solution containing the target component (10) diluted by one of the plurality of quantification units (143a, 143b) and one of the plurality of reservoirs (110a, 110b), by other of the plurality of quantification units (143a, 143b) and other of the plurality of reservoirs (110a, 110b) in a subsequent stage.

12. The sample processing method according to any one of claims 1 to 11, further comprising:
forming droplets (14) individually encapsulating the target component (10) contained in the prepared droplet forming sample (13) in a dispersion medium (15).

13. A sample processing chip for installation in a sample processing apparatus, the sample processing chip comprising:
a reservoir (100) configured to store a processing liquid (11) containing a target component (10) in a sample and a diluent (12) for diluting the processing liquid (11), wherein the processing liquid (11) is diluted in order to prepare a droplet forming sample for forming droplets (14) individually encapsulating the target component (10); **characterized in that**: the sample processing chip further comprises:
a gas supply unit (202) configured to supply a gas into the processing liquid (11) and the diluent (12) in the reservoir (100), wherein the gas supply unit (202) is configured to agitate the processing liquid (11) and the diluent (12) in the reservoir (110) by introducing a gas into the processing liquid (11) and the diluent (12) in the reservoir (110), wherein the gas is introduced into the reservoir (110) for a predetermined time of 0.1 seconds or more and 60 seconds or less to agitate the processing liquid (11) and the diluent (12); **in that**:
the reservoir (110) is a storage tank which is tube-shaped and connected to a substrate of the sample processing chip (100), and **in that**:
the gas supply unit (202) is configured to agitate the processing liquid (11) and the diluent (12) by introducing the gas from a bottom of the storage tank and rising the gas in the storage tank.

## Patentansprüche

1. Verfahren zum Verarbeiten einer Probe und zum Zubereiten einer tröpfchenbildenden Probe zum Bilden von Tröpfchen, die einen Zielbestandteil individuell einkapseln, wobei das Verfahren umfasst:
Speichern einer Verarbeitungsflüssigkeit (11), die einen Zielbestandteil (10) enthält, und eines Verdünnungsmittels (12) zum Verdünnen der Verarbeitungsflüssigkeit (11) in einem Reservoir (110) eines Probenverarbeitungschips (100), wobei die Verarbeitungsflüssigkeit (11) verdünnt wird, um eine tröpfchenbildende Probe (13) zum Bilden von Tröpfchen, die den Zielbestandteil (10) individuell einkapseln, zuzubereiten;
**dadurch gekennzeichnet, dass** das Verfahren weiter umfasst:
Aufrühren der Verarbeitungsflüssigkeit (11) und des Verdünnungsmittels (12) in dem Reservoir (110) durch Einleiten eines Gases in die Verarbeitungsflüssigkeit (11) und das Verdünnungsmittel (12) in dem Reservoir (110), wobei
bei dem Aufrühren das Gas in das Reservoir (110) für eine vorher festgelegte Zeit von 0,1 Sekunden oder mehr und 60 Sekunden oder weniger eingeleitet wird, um die Verarbeitungsflüssigkeit (11) und das Verdünnungsmittel (12) aufzurühren,
wobei
das Reservoir (110) ein Speichertank ist, der rohrförmig und mit einem Substrat des Probenverarbeitungschips (100) verbunden ist; und
bei dem Aufrühren die Verarbeitungsflüssigkeit (11) und das Verdünnungsmittel (12) durch Einleiten des Gases aus einem Boden des Speichertanks und Aufsteigen des Gases in dem Speichertank aufgerührt werden.

2. Probenverarbeitungsverfahren nach Anspruch 1, wobei
bei dem Aufrühren die Verarbeitungsflüssigkeit (11) und das Verdünnungsmittel (12) durch Einleiten des Gases in das Reservoir bei einem Druck von 100 mbar oder mehr und 1000 mbar oder weniger aufgerührt werden.

3. Probenverarbeitungsverfahren nach Anspruch 1 oder 2, wobei
bei dem Speichern, Schicken der Verarbeitungsflüssigkeit (11) zu dem Reservoir (110) mit dem Gas, nach Speichern des Verdünnungsmittels in dem Reservoir (110).

4. Probenverarbeitungsverfahren nach Anspruch 1 oder 2, wobei
der Probenverarbeitungschip (100) einen Einlass (112) zum Einleiten des Gases aufweist und
das Verfahren weiter umfasst:
Einleiten des Gases von dem Einlass (112), um die Verarbeitungsflüssigkeit (11) an das Reservoir (110) zu liefern, nach Speichern des Verdünnungsmittels (12) in dem Reservoir (110); und
Einleiten des Gases aus einem Bodenabschnitt des Reservoirs (110), der Zufuhr der Verarbeitungsflüssigkeit (11) durch das von dem Einlass (112) eingeleitete Gas folgend.

5. Probenverarbeitungsverfahren nach Anspruch 1 oder 2, wobei
der Probenverarbeitungschip (100) einen Einlass (112) zum Einleiten des Gases aufweist; und
das Verfahren weiter umfasst:
Einleiten des Gases von dem Einlass (112), um das Verdünnungsmittel von dem Einlass (112) an das Reservoir (110) zu schicken, nach Speichern der Verarbeitungsflüssigkeit (11) in dem Reservoir (110); und
Einleiten des Gases aus einem Bodenabschnitt des Reservoirs (110), dem Schicken der Verarbeitungsflüssigkeit (12) durch das von dem Einlass (112) eingebrachte Gas folgend.

6. Probenverarbeitungsverfahren nach einem der Ansprüche 1 bis 5, wobei
der Probenverarbeitungschip (100) eine Quantifizierungseinheit (143) aufweist; und
das Verfahren weiter umfasst:
Schicken der unter Verwendung der Quantifizierungseinheit (143) quantifizierten Verarbeitungsflüssigkeit (11) an das Reservoir.

7. Probenverarbeitungsverfahren nach Anspruch 6, wobei
die Quantifizierungseinheit (143) einen inneren Hohlraum umfasst, der eine in dem Probenverarbeitungschip gebildete vorher festgelegte Gehaltsmenge aufweist.

8. Probenverarbeitungsverfahren nach Anspruch 7, wobei
der Probenverarbeitungschip einen ersten Strömungsweg (141) und einen zweiten Strömungsweg (144) umfasst, verbunden mit dem inneren Hohlraum der Quantifizierungseinheit (143), wobei jeder des ersten Strömungswegs (141) und des zweiten Strömungswegs (144) ein Schaltventil (147a, 147b) aufweist;
der erste Strömungsweg (141) mit einem Einlass (141a) für die Verarbeitungsflüssigkeit (11) verbunden ist;
der zweite Strömungsweg (144) mit einem Entsorgungsanschluss (144a) verbunden ist; und
das Verfahren weiter umfasst:
Quantifizieren der Verarbeitungsflüssigkeit (11) durch Bring des ersten Strömungswegs (141) und des zweiten Strömungswegs (144) in einen offenen Zustand, Liefern der Verarbeitungsflüssigkeit (11) von dem ersten Strömungsweg (141) und Füllen der Verarbeitungsflüssigkeit (11) in den inneren Hohlraum der Quantifizierungseinheit (143).

9. Probenverarbeitungsverfahren nach Anspruch 8, wobei
der Probenverarbeitungschip einen dritten Strömungsweg (145) und einen vierten Strömungsweg (146) umfasst, verbunden mit dem inneren Hohlraum der Quantifizierungseinheit (143), wobei jeder des dritten Strömungswegs (145) und des vierten Strömungswegs (146) ein Schaltventil aufweist;
der dritte Strömungsweg (145) mit dem Reservoir verbunden ist;
der vierte Strömungsweg (146) mit einer Gasversorgungseinheit (202) zum Zuführen des Gases verbunden ist; und
das Verfahren weiter umfasst:
Füllen der Verarbeitungsflüssigkeit (11) in den inneren Hohlraum der Quantifizierungseinheit (143) durch Bring des ersten (141) Strömungswegs und des zweiten Strömungswegs (144) in einen offenen Zustand und des dritten Strömungswegs (145) und des vierten Strömungswegs (146) in geschlossenen Zustand und Liefern der Verarbeitungsflüssigkeit (11) an das Reservoir aus dem ersten Strömungsweg (141); und
Liefern der in dem inneren Hohlraum der Quantifizierungseinheit (143) gefüllten Verarbeitungsflüssigkeit (11) mit dem Gas aus der Gaszufuhreinheit (202) durch Bring des ersten Strömungswegs (141) und des zweiten Strömungswegs (144) in den geschlossenen Zustand und des dritten Strömungswegs (145) und des vierten Strömungswegs (146) in den offenen Zustand.

10. Probenverarbeitungsverfahren nach Anspruch 8 oder 9, wobei
bei dem Quantifizieren die Verarbeitungsflüssigkeit (11) zwischen dem ersten Strömungsweg (141), dem zweiten Strömungsweg (144) und dem inneren Hohlraum hin- und herbewegt wird.

11. Probenverarbeitungsverfahren nach einem der Ansprüche 6 bis 10, wobei
der Probenverarbeitungschip eine Vielzahl von Quantifizierungseinheiten (143a, 143b) und Reservoire (110a, 110b) entlang der Strömung der Verarbeitungsflüssigkeit (11) in Reihe verbunden umfasst; und
das Verfahren weiter umfasst:
weiter verdünnen gemischter Lösung, die den Zielbestandteil (10) enthält, der durch eine der Vielzahl von Quantifizierungseinheiten (143a, 143b) und einem der Vielzahl von Reservoirs (110a, 110b) verdünnt wurde, durch andere der Vielzahl von Quantifizierungseinheiten (143a, 143b) und anderes der Vielzahl von Reservoirs (110a, 110b) in einer nachfolgenden Stufe.

12. Probenverarbeitungsverfahren nach einem der Ansprüche 1 bis 11, weiter umfassend:
Bilden von Tröpfchen (14), die den Zielbestandteil (10) individuell einkapseln, der in der zubereiteten tröpfchenbildenden Probe (13) enthalten ist, in einem Dispersionsmedium (15).

13. Probenverarbeitungschip zur Installation in einer Probenverarbeitungseinrichtung, wobei der Probenverarbeitungschip umfasst:
ein Reservoir (100), konfiguriert, um eine Verarbeitungsflüssigkeit (11) zu speichern, die einen Zielbestandteil (10) in einer Probe und ein Verdünnungsmittel (12) zum Verdünnen der Verarbeitungsflüssigkeit (11) enthält, wobei die Verarbeitungsflüssigkeit (11) verdünnt wird, um eine tröpfchenbildende Probe zum Bilden von Tröpfchen (14) zuzubereiten, die den Zielbestandteil (10) individuell einkapseln; **dadurch gekennzeichnet, dass** der Probenverarbeitungschip weiter umfasst:
eine Gaszufuhreinheit (202), konfiguriert um ein Gas in die Verarbeitungsflüssigkeit (11) und das Verdünnungsmittel (12) in dem Reservoir (100) zuzuführen, wobei die Gaszufuhreinheit (202) konfiguriert ist, um die Verarbeitungsflüssigkeit (11) und das Verdünnungsmittel (12) in dem Reservoir (110) durch Einleiten eines Gases in die Verarbeitungsflüssigkeit (11) und das Verdünnungsmittel (12) in dem Reservoir (110) aufzurühren, wobei das Gas in das Reservoir (110) für eine vorher festgelegte Zeit von 0,1 Sekunden oder mehr und 60 Sekunden oder weniger eingeleitet wird, um die Verarbeitungsflüssigkeit (11) und das Verdünnungsmittel (12) aufzurühren; dadurch, dass:
das Reservoir (110) ein Speichertank ist, der rohrförmig und mit einem Substrat des Probenverarbeitungschips (100) verbunden ist, und dadurch, dass:
die Gaszufuhreinheit (202) konfiguriert ist, um die Verarbeitungsflüssigkeit (11) und das Verdünnungsmittel (12) durch Einleiten des Gases aus einem Boden des Speichertanks und Aufsteigen des Gases in dem Speichertank aufzurühren.

## Revendications

1. Procédé de traitement d'un échantillon et de préparation d'un échantillon formant des gouttelettes consistant à former des gouttelettes encapsulant individuellement un composant cible, le procédé comprenant :
le stockage d'un liquide de traitement (11) contenant un composant cible (10) et un diluant (12) pour diluer le liquide de traitement (11) dans un réservoir (110) d'une puce de traitement d'échantillon (100), dans lequel le liquide de traitement (11) est dilué afin de préparer un échantillon formant des gouttelettes (13) pour former des gouttelettes encapsulant individuellement le composant cible (10) ;
**caractérisé en ce que** le procédé comprend en outre :
l'agitation du liquide de traitement (11) et du diluant (12) dans le réservoir (110) en introduisant un gaz dans le liquide de traitement (11) et le diluant (12) dans le réservoir (110), dans lequel
lors de l'agitation, le gaz est introduit dans le réservoir (110) pendant une durée prédéterminée de 0,1 seconde ou plus et de 60 secondes ou moins pour agiter le liquide de traitement (11) et le diluant (12),
dans lequel
le réservoir (110) est une cuve de stockage qui est en forme de tube et connectée à un substrat de la puce de traitement d'échantillon (100) ; et
lors de l'agitation, le liquide de traitement (11) et le diluant (12) sont agités en introduisant le gaz à partir d'un fond de la cuve de stockage et en faisant monter le gaz dans la cuve de stockage.

2. Procédé de traitement d'un échantillon selon la revendication 1, dans lequel
lors de l'agitation, le liquide de traitement (11) et le diluant (12) sont agités en introduisant le gaz dans le réservoir à une pression de 100 mbar ou plus et de 1000 mbar ou moins.

3. Procédé de traitement d'un échantillon selon la revendication 1 ou 2, dans lequel
lors du stockage, l'envoi du liquide de traitement (11) vers le réservoir (110) avec le gaz, après stockage du diluant dans le réservoir (110).

4. Procédé de traitement d'un échantillon selon les revendications 1 ou 2, dans lequel
la puce de traitement d'échantillon (100) présente une entrée (112) pour introduire le gaz ; et
le procédé comprend en outre :
l'introduction du gaz à partir de l'entrée (112) pour délivrer le liquide de traitement (11) au réservoir (110), après stockage du diluant (12) dans le réservoir (110) ; et
l'introduction du gaz à partir d'une partie inférieure du réservoir (110) après l'introduction du liquide de traitement (11) par le gaz introduit à partir de l'entrée (112).

5. Procédé de traitement d'un échantillon selon les revendications 1 ou 2, dans lequel
la puce de traitement d'échantillon (100) présente une entrée (112) pour introduire le gaz ; et
le procédé comprend en outre :
l'introduction du gaz à partir de l'entrée (112) afin d'envoyer le diluant vers le réservoir (110) à partir de l'entrée (112), après stockage du liquide de traitement (11) dans le réservoir (110) ; et
l'introduction du gaz à partir d'une partie inférieure du réservoir (110) après l'envoi du diluant (12) par le gaz introduit à partir de l'entrée (112).

6. Procédé de traitement d'un échantillon selon l'une quelconque des revendications 1 à 5, dans lequel
la puce de traitement d'échantillon (100) présente une unité de quantification (143) ; et
le procédé comprend en outre :
l'envoi du liquide de traitement (11) quantifié en utilisant l'unité de quantification (143) vers le réservoir.

7. Procédé de traitement d'un échantillon selon la revendication 6, dans lequel
l'unité de quantification (143) comprend une cavité interne présentant une quantité de contenu prédéterminée formée dans la puce de traitement d'échantillon.

8. Procédé de traitement d'un échantillon selon la revendication 7, dans lequel
la puce de traitement d'échantillon comprend un premier trajet d'écoulement (141) et un deuxième trajet d'écoulement (144) connectés à la cavité interne de l'unité de quantification (143), dans lequel chacun du premier trajet d'écoulement (141) et du deuxième trajet d'écoulement (144) présente une vanne tout ou rien (147a, 147b) ;
le premier trajet d'écoulement (141) est connecté à une entrée (141a) pour le liquide de traitement (11) ;
le deuxième trajet d'écoulement (144) est connecté à un orifice d'évacuation (144a) ; et
le procédé comprend en outre :
la quantification du liquide de traitement (11) en amenant le premier trajet d'écoulement (141) et le deuxième trajet d'écoulement (144) dans un état ouvert, la distribution du liquide de traitement (11) à partir du premier trajet d'écoulement (141) et le remplissage du liquide de traitement (11) dans la cavité interne de l'unité de quantification (143).

9. Procédé de traitement d'un échantillon selon la revendication 8, dans lequel
la puce de traitement d'échantillon comprend en outre un troisième trajet d'écoulement (145) et un quatrième trajet d'écoulement (146) connectés à la cavité interne de l'unité de quantification (143), dans lequel chacun du troisième trajet d'écoulement (145) et du quatrième trajet d'écoulement (146) présente une vanne tout ou rien ;
le troisième trajet d'écoulement (145) est connecté au réservoir ;
le quatrième trajet d'écoulement (146) est connecté à une unité d'alimentation en gaz (202) pour fournir le gaz ; et
le procédé comprend en outre :
le remplissage du liquide de traitement (11) dans la cavité interne de l'unité de quantification (143) en amenant le premier trajet d'écoulement (141) et le deuxième trajet d'écoulement (144) dans un état ouvert et le troisième trajet d'écoulement (145) et le quatrième trajet d'écoulement (146) dans un état fermé et en délivrant le liquide de traitement (11) au réservoir à partir du premier trajet d'écoulement (141) ; et
la distribution du liquide de traitement (11) introduit dans la cavité interne de l'unité de quantification (143) avec le gaz provenant de l'unité d'alimentation en gaz (202) en amenant le premier trajet d'écoulement (141) et le deuxième trajet d'écoulement (144) dans l'état fermé et le troisième trajet d'écoulement (145) et le quatrième trajet d'écoulement (146) dans l'état ouvert.

10. Procédé de traitement d'un échantillon selon la revendication 8 ou 9, dans lequel
lors de la quantification, le liquide de traitement (11) est déplacé en va-et-vient entre le premier trajet d'écoulement (141), le deuxième trajet d'écoulement (144) et la cavité interne.

11. Procédé de traitement d'un échantillon selon l'une quelconque des revendications 6 à 10, dans lequel
la puce de traitement d'échantillon comprend une pluralité d'unités de quantification (143a, 143b) et de réservoirs (110a, 110b) connectés en série le long de l'écoulement du liquide de traitement (11) ; et
le procédé comprend en outre :
la dilution supplémentaire d'une solution mélangée contenant le composant cible (10) dilué par l'une de la pluralité d'unités de quantification (143a, 143b) et l'un de la pluralité de réservoirs (110a, 110b), par l'autre de la pluralité d'unités de quantification (143a, 143b) et l'autre de la pluralité de réservoirs (110a, 110b) dans une étape ultérieure.

12. Procédé de traitement d'un échantillon selon l'une quelconque des revendications 1 à 11, comprenant en outre :
la formation de gouttelettes (14) encapsulant individuellement le composant cible (10) contenu dans l'échantillon formant des gouttelettes (13) préparé dans un milieu de dispersion (15).

13. Puce de traitement d'échantillon pour une installation dans un appareil de traitement d'échantillon, la puce de traitement d'échantillon comprenant :
un réservoir (100) configuré pour stocker un liquide de traitement (11) contenant un composant cible (10) dans un échantillon et un diluant (12) pour diluer le liquide de traitement (11), dans laquelle le liquide de traitement (11) est dilué afin de préparer un échantillon formant des gouttelettes pour former des gouttelettes (14) encapsulant individuellement le composant cible (10) ; **caractérisée en ce que** : la puce de traitement d'échantillon comprend en outre :
une unité d'alimentation en gaz (202) configurée pour fournir un gaz dans le liquide de traitement (11) et le diluant (12) dans le réservoir (100), dans laquelle l'unité d'alimentation en gaz (202) est configurée pour agiter le liquide de traitement (11) et le diluant (12) dans le réservoir (110) en introduisant un gaz dans le liquide de traitement (11) et le diluant (12) dans le réservoir (110), dans laquelle le gaz est introduit dans le réservoir (110) pendant une durée prédéterminée de 0,1 seconde ou plus et de 60 secondes ou moins pour agiter le liquide de traitement (11) et le diluant (12) ; **en ce que** :
le réservoir (110) est une cuve de stockage qui est en forme de tube et connectée à un substrat de la puce de traitement d'échantillon (100), et **en ce que** :
l'unité d'alimentation en gaz (202) est configurée pour agiter le liquide de traitement (11) et le diluant (12) en introduisant le gaz à partir d'un fond de la cuve de stockage et en faisant monter le gaz dans la cuve de stockage.
